# EUROPEAN PATENT APPLICATION

(11) **EP 4 614 900 A1**
(43) Date of publication of application: **10.09.2025**
(21) Application number: 22964059.4
(22) Date of filing: 04.11.2022
(51) Int. Cl.: H04L 27/00, H04W 72/04

(54) **WIRELESS COMMUNICATION METHOD, COMMUNICATION DEVICE, AND ACCESS NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); SHI, Cong, Dongguan, Guangdong 523860 (CN)
(74) Representative: RGTH
(86) International application number: PCT/CN2022/129997
(87) International publication number: WO 2024/092752

(57) **Abstract**

Provided are a wireless communication method, a communication device, and an access network device. The method comprises: a communication device sending first information to an access network device, the first information comprising information related to target data, and the communication device comprising a terminal device and/or a core network device. In the embodiments of the present application, a communication device may send first information to an access network device, so as to indicate information related to target data, and accordingly facilitate the access network device in performing configurations on the basis of the first information, thereby improving the rationality of configuration.

## Description

### TECHNICAL FIELD

This application relates to the field of communications technologies, and more specifically, to a wireless communication method, a communications device, and an access network device.

### BACKGROUND

As a plurality of service types (such as an extended reality (EXtended Reality, XR) service or an ultra-reliable low-latency communications (ultra-reliable low-latency communications, URLLC) service) are introduced into a communications system, an access network device performs configuration at a granularity of a terminal device (for example, scheduling a resource, allocating a resource, or configuring a parameter), resulting in a mismatch between a configuration of the access network device and a transmission requirement of target data, and failing to meet the transmission requirement of the target data.

### SUMMARY

This application provides a wireless communication method, a communications device, and an access network device. The following describes the aspects related to this application.

According to a first aspect, a wireless communication method is provided, including: transmitting, by a communications device, first information to an access network device, where the first information includes information related to target data, and the communications device includes a terminal device and/or a core network device.

According to a second aspect, a wireless communication method is provided, including: receiving, by an access network device, first information transmitted by a communications device, where the first information includes information related to target data, and the communications device includes a terminal device and/or a core network device.

According to a third aspect, a communications device is provided, including: a transmitting unit, configured to transmit first information to an access network device, where the first information includes information related to target data, and the communications device includes a terminal device and/or a core network device.

According to a fourth aspect, an access network device is provided, including: a receiving unit, configured to receive first information transmitted by a communications device, where the first information includes information related to target data, and the communications device includes a terminal device and/or a core network device.

According to a fifth aspect, a communications device is provided, including a processor, a memory, and a communications interface, where the memory is configured to store one or more computer programs, and the processor is configured to invoke the computer program in the memory, to cause the communications device to execute some or all of the steps in the method according to the first aspect.

According to a sixth aspect, an access network device is provided, including a processor, a memory, and a transceiver, where the memory is configured to store one or more computer programs, and the processor is configured to invoke the computer program in the memory, to cause the access network device to execute some or all of the steps in the method according to the second aspect.

According to a seventh aspect, an embodiment of this application provides a communications system, where the system includes the foregoing communications device and/or the foregoing access network device. In another possible design, the system may further include another device that interacts with the terminal device or the network device in the solutions provided in embodiments of this application.

According to an eighth aspect, an embodiment of this application provides a computer-readable storage medium, where the computer-readable storage medium stores a computer program, and the computer program causes a communications device (for example, a terminal device or a network device) to execute some or all of steps in the method according to each of the foregoing aspects.

According to a ninth aspect, an embodiment of this application provides a computer program product, where the computer program product includes a non-transitory computer-readable storage medium that stores a computer program, and the computer program is operable to cause a communications device (for example, a terminal device or a network device) to execute some or all of steps in the method according to each of the foregoing aspects. In some implementations, the computer program product may be a software installation package.

According to a tenth aspect, an embodiment of this application provides a chip, where the chip includes a memory and a processor, and the processor may invoke a computer program from the memory and run the computer program, to implement some or all of steps in the method according to each of the foregoing aspects.

In embodiments of this application, a communications device may transmit first information to an access network device, to indicate information related to target data. Correspondingly, the access network device can perform the foregoing configuration based on the first information, to improve configuration rationality.

### BRIEF DESCRIPTION OF DRAWINGS

FIG. 1 shows a wireless communications system 100 to which embodiments of this application are applied.
FIG. 2 is a schematic diagram of a transmission mechanism based on a QoS flow.
FIG. 3 is a schematic diagram of a MAC CE to which embodiments of this application are applicable.
FIG. 4 is a schematic flowchart of a wireless communication method according to another embodiment of this application.
FIG. 5 is a schematic diagram of a MAC CE according to another embodiment of this application.
FIG. 6 is a schematic diagram of a MAC CE according to another embodiment of this application.
FIG. 7 is a schematic diagram of a MAC CE according to another embodiment of this application.
FIG. 8 is a schematic diagram of a MAC CE according to another embodiment of this application.
FIG. 9 is a schematic diagram of a MAC CE according to another embodiment of this application.
FIG. 10 is a schematic diagram of a MAC CE according to another embodiment of this application.
FIG. 11 is a schematic diagram of a MAC CE according to another embodiment of this application.
FIG. 12 is a schematic diagram of a MAC CE according to another embodiment of this application.
FIG. 13 is a schematic diagram of a MAC CE according to another embodiment of this application.
FIG. 14 is a schematic diagram of a communications device according to an embodiment of this application.
FIG. 15 is a schematic diagram of an access network device according to an embodiment of this application.
FIG. 16 is a schematic diagram of a communications apparatus according to an embodiment of this application.

### DESCRIPTION OF EMBODIMENTS

Technical solutions in this application are described below with reference to the accompanying drawings.

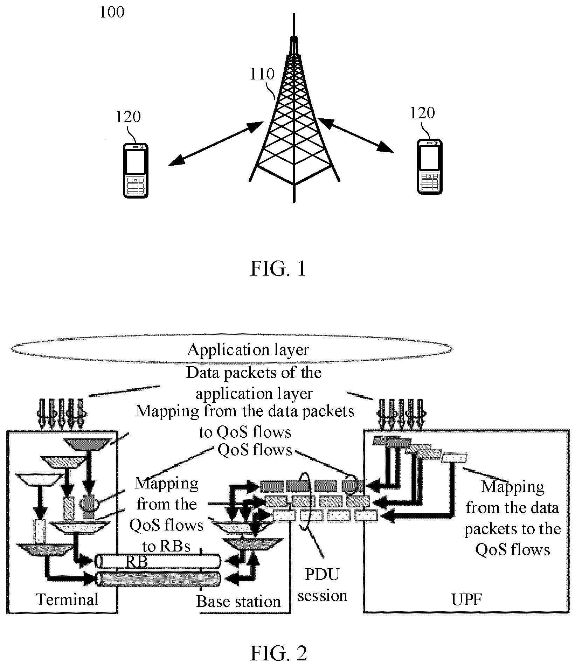

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminals. Optionally, the wireless communications system 100 may include a plurality of network devices, and another quantity of terminal devices may be included within coverage of each network device, which is not limited in embodiments of this application.

Optionally, the wireless communications system 100 may further include another network entity such as a network controller or a mobility management entity, which is not limited in embodiments of this application.

It should be understood that the technical solutions in embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may also be applied to a future communications system, such as a sixth generation mobile communications system or a satellite communications system.

A terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, a UE may function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal by using a base station.

A network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names below, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device to device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Quality of service (Quality of Service, QoS) flow

Referring to FIG. 2, a concept of a QoS flow is introduced into a 5G network. After accessing a 5G network by using a Uu interface, a terminal may establish, under control of an SMF, a QoS flow for data transmission. The SMF provides a base station with QoS flow configuration information of each QoS flow, which specifically includes information such as a bit rate requirement, a delay requirement, and a bit error rate requirement. For each QoS flow, the base station may schedule a radio resource according to the QoS flow configuration information received from the SMF, to meet a QoS requirement of the QoS flow. In a QoS flow in the 5G network, both an uplink data flow (that is, a data flow transmitted by a terminal to a peer device by using the 5G network) and a downlink data flow (that is, a data flow transmitted by the peer device to the terminal by using the 5G network) may be transmitted. Herein, the peer device refers to a peer application server or a peer terminal. A delay requirement of the uplink data flow in the QoS flow is the same as that of the downlink data flow in the QoS flow. If a delay requirement of an uplink data flow of a service is different from that of a downlink data flow of the service, the uplink data flow and the downlink data flow are transmitted by using different QoS flows. Herein, a delay refers to a data transmission delay between a terminal and a UPF.

In a mobile communications network, to transmit user plane data, one or more QoS flows are necessary to be established, while different QoS flows correspond to different QoS parameters. As an important measurement criterion of communication quality (communication quality), a QoS parameter is generally used to indicate a characteristic of a QoS flow. The QoS parameter may include but is not limited to: a 5G QoS feature (5G QoS Identifier, 5QI), an address resolution protocol (address resolution protocol, ARP), a guaranteed flow bit rate (guaranteed flow bit rate, GFBR), a maximum flow bit rate (maximum flow bit rate, MFBR), a maximum packet loss rate (UL/DL) (maximum packet loss rate), an end-to-end packet delay budget (packet delay budget, PDB), an AN-PDB, a packet error rate (packet error rate, PER), a priority level (priority level), an averaging window (averaging window), a resource type (resource type), a maximum data burst volume (maximum data burst volume), a UE-aggregate maximum bit rate (UE-aggregate maximum bit rate, UE-AMBR), a session-AMBR (session-AMBR), or the like.

A filter (filter), or referred to as a service data flow (service data flow, SDF) template, includes a parameter that describes a characteristic of a data packet, and is configured to filter out a specific data packet that has been bound to a specific QoS flow. Herein, a most commonly used filter is an IP quintuple, that is, a source IP address, a destination IP address, a source port number, a destination port number, and a protocol type.

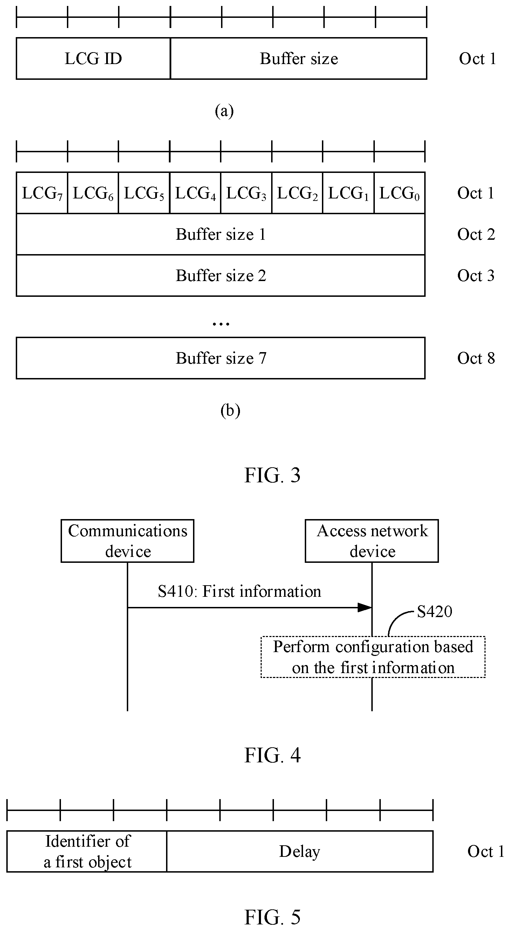

A network-side user plane network element and a terminal form a filter (referring to a trapezoid in the terminal and a parallelogram in the UPF shown in FIG. 3) according to a data packet characteristic parameter combination, configured to select an uplink or downlink data packet that has a data packet characteristic and that is transmitted on a user plane, and bind the selected uplink or downlink data packet to a data flow.

### Transmission feature of a service

With widespread application of a communications system, services such as extended reality (EXtended Reality, XR) and URLLC are introduced into the communications system.

The URLLC service may include services such as factory automation (factory automation), transport industry (transport industry), and smart power (electrical power distribution).

For the URLLC service, on the one hand, this service requires a relatively small transmission delay (for example, 0.5 ms) and relatively high reliability (for example, 99.999%). On the other hand, this service may have a pseudo-periodic, that is, a jitter (jitter) occurs on a time at which the service arrives, or this service generally does not arrive at a specified time point, but arrives at any instant within a time period. In addition, the period of this service is generally a non-integer period, for example, 16.67 ms. Finally, times at which different service flows in this service arrive may vary greatly.

Extended reality is applied to a plurality of heterogeneous use cases and services, and is studied and summarized in SA1, SA2, and SA4, including but not limited to TR 22.842 and TR 26.928. These XR use cases may be roughly classified into augmented reality (augmented reality, AR), virtual reality (virtual reality, VR), mixed reality (mixed reality, MR), cloud gaming (cloud gaming, CG), and the like.

Currently, XR and media services (XR and media services, XRM) generally include a video frame and an audio frame. The video frame may include one or more video slices (video slice), where the video slices may be understood as spatially different areas in the video frame and are encoded separately from the other areas in the same frame.

For a service corresponding to VR, service data may generally include uplink pose information (pose information) and a downlink video stream (DL video stream).

For a service corresponding to CG, service data generally includes uplink control information (UL control information) and a downlink video stream (DL video stream).

For a service corresponding to AR, service data generally includes uplink pose information and a downlink video stream.

Especially for the AR service, if pose information and a video stream are included in a period, the two types of data arrive at different times.

In some scenarios, a period of the control information or the pose information may generally be 4 ms, and a corresponding packet size is generally 100 bytes. A period of a video stream is generally 16.67 ms, and a size of a packet in the video stream is generally 0.67 Mbps. It may be learned that even for the same type of XR service, periods and packet sizes of different data flows vary greatly.

In addition, similar to the URLLC service, the XR service requires relatively high reliability and a relatively low delay during transmission. Correspondingly, when scheduling a resource for a terminal device supporting the XR service, a network device is necessary to meet a QoS requirement of the service and also meet a power consumption requirement of the terminal device, thereby preventing unnecessary power consumption. In addition, for a communications system accessed by a large quantity of terminal devices that support the foregoing services, an access network device is necessary to allocate resources with reference to a network capacity requirement.

In conclusion, it may be learned that, both the URLLC service and the XR service generally have the following service features: a non-integer traffic period; a variable data rate; quasi-periodicity; and having a delay requirement and being delay-sensitive.

### Resource scheduling process

A terminal device may notify, by using a buffer status report (buffer status report, BSR), an access network device of a data volume of to-be-transmitted uplink data (or a volume of data buffered by the terminal device). Correspondingly, the access network device may schedule an uplink resource for the terminal device according to the data volume of the to-be-transmitted uplink data.

In some implementations, transmitting a BSR at a granularity of a logical channel (logical channel, LC) may cause relatively large overheads in the BSR transmission. Therefore, to reduce the overheads in the BSR transmission, a group-based reporting manner may be used. That is, a plurality of uplink logical channels may correspond to a logical channel group (logical channel group, LCG). Correspondingly, the terminal device may report a BSR at a granularity of an LCG.

In some implementations, a correspondence between an LC and an LCG may be configured by a network device. For example, the access network device may configure the correspondence by using an RRC configuration. The terminal device reports a BSR based on the LCG. Currently, each terminal device in a communications system (for example, an NR system) may support a maximum of eight LCGs.

In some implementations, BSRs may include a plurality of types: a regular BSR (regular BSR), a padding BSR (Padding BSR), and a periodic BSR (periodic BSR). The following describes triggering conditions for the three types of BSRs.

Triggering condition 1: for a logical channel corresponding to data currently transmitted by a terminal device, uplink data arrives at a logical channel with a higher priority in the terminal device, and a regular BSR may be triggered.

Triggering condition 2: When a retransmission BSR timer (*retxBSR-Timer*) expires and uplink data is to be transmitted currently on at least one uplink logical channel, a regular BSR may be triggered.

Triggering condition 3: After an uplink resource allocated to a terminal device completes carrying of to-be-transmitted uplink data, a padding part of the uplink resource may carry BSR media access control control element (medium access control control element, MAC CE), and a padding BSR may be triggered.

Triggering condition 4: If a periodic BSR timer (*periodicBSR-Timer*) expires, a periodic BSR may be triggered.

It should be noted that in some scenarios, if a plurality of logical channels trigger regular BSRs at the same time, each logical channel in these logical channels triggers a separate regular BSR.

The foregoing describes the BSR types, and the following describes BSR formats. According to reported content and a form of a BSR, BSRs may be classified into: a short BSR (Short BSR), a short truncated BSR (Short Truncated BSR), a long BSR (Long BSR), and a long truncated BSR (Long Truncated BSR).

In some implementations, a BSR may be carried by a BSR MAC CE. For example, a short BSR and/or a short truncated BSR may be transmitted by using a short BSR MAC CE or a short truncated BSR MAC CE. Referring to FIG. 3, a short BSR MAC CE or a short truncated BSR MAC CE has a fixed size, that is, occupies one byte, and can carry only BSR information of one logical channel group. The short BSR MAC CE or the short truncated BSR MAC CE may include an LCG ID field and a BSR field, where the LCG ID field may carry an LCG ID corresponding to BSR information, and generally occupies two bits. A value of a parameter in this field ranges from 0 to 3. The BSR field is used to carry BSR information, and generally occupies six bits. A value of a parameter in this field ranges from 0 to 63.

For another example, a long BSR and/or a long truncated BSR may be carried by a long BSR MAC CE or a long truncated BSR MAC CE. Referring to FIG. 4, a long BSR MAC CE or a long truncated BSR MAC CE may occupy three bytes, and may carry BSR information of all logical channel groups. Currently, because only four types of logical channel groups are specified in a protocol, an LCG ID value may not be carried. The long BSR MAC CE or the long truncated BSR MAC CE may include an LCG ID field and a BSR field, where the LCG ID field may occupy one byte and is used to carry an LCG ID 0 to an LCG ID 7. The BSR field is used to carry BSR information corresponding to an LCG 0 to an LCG 3, where a buffer size (Buffer Size) 0 corresponds to a BSR value of the LCG ID 0, a buffer size 1 corresponds to a BSR value of the LCG ID 1, a buffer size 2 corresponds to a BSR value of the LCG ID 2, and a buffer size 3 corresponds to a BSR value of the LCG ID 3.

The foregoing describes the four BSR formats and triggering conditions for BSRs, and the following describes a scenario in which the four BSR formats are applicable.

For a regular BSR and a periodic BSR, if a quantity of LCGs that have target data in a terminal device is greater than 1, the terminal device may transmit a long BSR. In this case, the terminal device may transmit, by using the long BSR, a data volume of target data of all LCGs that have target data. On the contrary, the terminal device may transmit a short BSR.

For a padding BSR, if a quantity of padding bits is enough to carry a short BSR but is not enough to carry a long BSR, a quantity of LCGs that have uplink data is greater than 1, and the quantity of the padding bits is just enough to carry a short BSR, the terminal device reports a short truncated BSR. BSR information in the short truncated BSR is a data volume of an LCG corresponding to a logical channel with a highest priority in logical channels that have to-be-transmitted uplink data.

In another case, if a quantity of padding bits is enough to carry a short BSR but is not enough to carry a long BSR, a quantity of LCGs that have uplink data is greater than 1, and the quantity of the padding bits is not enough to carry a short BSR, the terminal device may transmit a long truncated BSR. An LCG corresponding to BSR information in the long truncated BSR may be determined based on a priority of a logical channel included in an LCG having to-be-transmitted uplink data. In this case, if priorities of logical channels included in a plurality of LCGs are the same, a reporting sequence may be determined based on an LCG ID.

In another case, if a quantity of padding bits is enough to carry a short BSR but is not enough to carry a long BSR, and a quantity of LCGs that have uplink data is not greater than 1, the terminal device may transmit a short BSR.

In another case, if a quantity of padding bits is enough to carry a long BSR, the terminal device may transmit a long BSR. A BSR may carry a data volume of all LCGs that have to-be-transmitted uplink data.

### MAC packeting manner

Similar to LTE, in a current communications system (for example, an NR system), an access network device allocates an uplink grant (UL grant) at a granularity of a terminal device. Radio bearers of the terminal device whose data is transmitted by using the allocated uplink grant may be determined by the terminal device. That is, based on the allocated uplink grant, the terminal device may determine a volume of transmitted data of each logical channel for an initially transmitted MAC packet data unit (packet data unit, PDU). In some cases, the terminal device is further necessary to allocate an uplink grant to a MAC CE.

To implement multiplexing of an uplink logical channel, a priority may be allocated to each uplink logical channel. For a MAC PDU resource with a given size, if a plurality of uplink logical channels need to transmit data at the same time, the MAC PDU resource may be sequentially allocated in descending order of logical channel priorities of the uplink logical channels. In addition, to ensure fairness between different logical channels, a prioritized bit rate (prioritized bit rate, PBR) mechanism is introduced. That is, when performing logical channel multiplexing, the terminal device can preferentially meet a minimum bit rate requirement of each logical channel, thereby preventing an uplink logical channel with a high logical channel priority from always occupying the allocated uplink grant, thus ensuring that another uplink logical channel with a low logical channel priority can occupy the allocated uplink grant.

In some implementations, to implement multiplexing of an uplink logical channel, the access network device may configure one or more of the following parameters for each uplink logical channel: a logical channel priority, a PBR, or a bucket size duration (bucket size duration, BSD).

For a logical channel priority, a smaller value of a priority of a logical channel indicates a higher priority of the logical channel. On the contrary, a larger value of a priority of a logical channel indicates a lower priority of the logical channel.

For a PBR, this parameter is used to represent a minimum rate that a logical channel is necessary to implement.

For a BSD, this parameter represents a depth of a token bucket. By limiting the depth of the token bucket, flow control may be performed on a data burst (data burst) to an extent, thereby ensuring smooth data transmission.

The following briefly describes an uplink grant allocation scheme implemented based on a token bucket algorithm. For each logical channel (represented by a variable j), a terminal device maintains a variable Bⱼ, where Bⱼ indicates a quantity of currently available tokens in a token bucket. When the logical channel is newly added, Bⱼ is necessary to be initialized to 0. Subsequently, for each TTI (which is 1 ms for an LTE system), Bⱼ should be increased by PBR × TTI (that is, PBR), indicating that a quantity of tokens newly added into the token bucket is the PBR. The PBR is a bit rate of data that is necessary to be preferentially processed by the logical channel. Bⱼ is not increased infinitely. When tokens of the token bucket overflow, a value of Bⱼ is limited to a size of the token bucket. The value of Bⱼ is Bⱼ = PBR × BSD.

When the terminal device receives a UL grant and is necessary to perform retransmission, the terminal device may perform logical channel priority processing according to the following steps 1 to 3.

In step 1, the uplink grant is allocated in descending order of logical channel priorities, and packeting (MAC UL transport block) is performed on each logical channel. When allocating the uplink grant to a logical channel j, first, a quantity of remaining tokens (that is, a value of Bⱼ) in the token bucket is checked. If the quantity of the tokens is greater than or equal to a volume of buffered data, the uplink grant may be allocated to the logical channel j depending on a volume of data in a buffer of the logical channel j. Certainly, if the uplink grant is not enough to transmit all the data in the buffer of the logical channel j, all the uplink grant may be allocated to the logical channel j. If the quantity of the tokens is less than the volume of the buffered data, the uplink grant may be allocated depending on the quantity of the tokens. Certainly, if the uplink grant is insufficient relative to the quantity of the tokens, all the uplink grant is allocated to the logical channel j. When a PBR of the logical channel j is set to infinity ("infinity"), i the uplink grant is allocated to the logical channel j without referring to a value of Bⱼ of the logical channel j, and all the uplink grant is allocated to this logical channel. If there is a remaining uplink grant after buffered data of the logical channel j is transmitted, the remaining uplink grant is allocated to other logical channels.

In step 2: a size of all MAC SDUs of a MAC PDU established for the logical channel j in step 1 is subtracted from Bⱼ.

In step 3, if there is a remaining uplink grant after step 1 and step 2 are executed, a remaining resource is sequentially allocated to all logical channels in descending order of logical channel priorities regardless of the value of Bⱼ. A logic channel with a low priority may be served only when all data of a logic channel with a high priority is transmitted and the uplink grant is not exhausted. That is, in this case, the terminal device maximizes data transmission of the logical channel with the high priority.

In the uplink grant allocation process, the terminal device may further follow the following principles:
if the remaining uplink grant may be enough to transmit a radio link control (radio link control, RLC) service data unit (service data unit, SDU), the RLC SDU should not be segmented;
if an RLC SDU has to be segmented due to a size of the remaining uplink grant, a size of a segment should be as large as possible based on the size of the remaining uplink grant, to effectively utilize the remaining uplink grant;
transmission of data should be maximized; and
if a size of the uplink grant is greater than or equal to eight bytes, and the terminal device needs to transmit data, the terminal device cannot transmit only a padding BSR or only padding bits.

In some scenarios, for different signals and/or logical channels, when performing logical channel priority processing, the terminal device is further necessary to follow the following priority sequence (arranged in descending order of priorities): a cell-radio network temporary identifier (cell-radio network temporary Identifier, C-RNTI) MAC CE or data from an uplink logical channel UL-CCCH; a configured grant confirmation (configured grant confirmation) MAC CE; a BSR MAC CE used for a BSR except a padding BSR; a single entry physical layer (single entry PHR) MAC CE or a multiple entry physical layer (Multiple Entry PHR) MAC CE; data from any logical channel except a UL-CCCH; a MAC CE used for a terminal device that supports a recommended bit rate query (Recommended bit rate query); and a BSR MAC CE used for a padding BSR.

It may be learned from the foregoing descriptions that, as a plurality of service types (such as an XR service or a URLLC service) are introduced into a communications system, an access network device performs configuration at a granularity of a terminal device (for example, scheduling a resource, allocating a resource, or configuring a parameter), resulting in a mismatch between a configuration of the access network device and a transmission requirement of target data and failing to meet the transmission requirement of the target data.

Therefore, to improve configuration rationality of the access network device, embodiments of this application provide a wireless communication method. A communications device may transmit first information to an access network device, to indicate information related to target data. Correspondingly, the access network device may perform the foregoing configuration based on the first information, to improve configuration rationality. It should be noted that the communications device includes a terminal device and/or a core network device (for example, an SMF). For ease of understanding, the following describes the wireless communication method according to embodiments of this application with reference to FIG. 4.

FIG. 4 is a schematic flowchart of a wireless communication method according to an embodiment of this application. The method shown in FIG. 4 includes step S410.

In step S410, a communications device transmits first information to an access network device.

In some implementations, the first information includes information related to target data. The target data may be to-be-transmitted data. Certainly, in embodiments of this application, the target data may alternatively be data that does not arrive. This is not limited in embodiments of this application.

In some implementations, the first information may include second information associated with a static or semi-static feature of the target data and/or third information associated with a dynamic feature of the target data.

The static or semi-static feature may be understood as a feature that changes relatively slowly or remains unchanged in features of the target data. In some implementations, the semi-static feature may alternatively be a feature that periodically changes. Certainly, in embodiments of this application, the semi-static feature may alternatively be a feature that aperiodically changes. This is not limited in embodiments of this application.

In embodiments of this application, the static or semi-static feature may include one or more of the following: a transmission direction of the target data; a period of the target data; a time at which the target data arrives; a size of a data packet of the target data; or information about a first delay of the target data.

In some implementations, the transmission direction of the target data may be used to indicate whether the target data is uplink data or downlink data.

In some implementations, the period of the target data may include a period of a data burst corresponding to the target data, a period of a PDU corresponding to the target data, a period of a PDU set corresponding to the target data, a period of a data packet corresponding to the target data, or a period of a service corresponding to the target data.

In some implementations, the time at which the target data arrives may include one or more of the following: a time at which a first piece of burst data corresponding to the target data arrives; a time at which a first packet in a first piece of burst data corresponding to the target data arrives; a time at which a last packet in a first piece of burst data corresponding to the target data arrives; a time at which a piece (except a first piece and a last piece) of burst data corresponding to the target data arrives; a time at which a first packet in a piece of burst data corresponding to the target data arrives; or a time at which a last packet in a piece of burst data corresponding to the target data arrives.

In some implementations, if the static or semi-static feature includes the time at which the target data arrives, the second information includes one or more of the following: the time at which the target data arrives; a time at which the target data is transmitted; a time at which the target data leaves; or a time at which a jitter occurs on the target data.

In some implementations, the size of the data packet of the target data may include one or more of the following: a size of a first packet in a first piece of burst data corresponding to the target data; a size of a last packet in a first piece of burst data corresponding to the target data; a size of a piece (except a first piece and a last piece) of burst data corresponding to the target data; a size of a first packet in a piece of burst data corresponding to the target data; or a size of a last packet in a piece of burst data corresponding to the target data.

In some implementations, the first delay may be a delay associated with a service to which the target data belongs. Therefore, the first delay is generally a static delay.

The dynamic feature may be understood as a changeable feature, or may be understood as a feature that changes relatively fast. In some implementations, the dynamic feature may include one or more of the following: information about a second delay of the target data; a period corresponding to the target data; buffer information of the target data; information about a data volume of the target data; or time information corresponding to a dynamic change of the target data.

As described above, for some specific services (such as a URLLC service, an XR service, a service that supports a PDU set, or a service that supports a data burst), delays corresponding to different data flows may be different. Therefore, a delay of such type of service may be understood as a dynamic feature of target data.

As described above, for some specific services (such as a URLLC service, an XR service, a service that supports a PDU set, or a service that supports a data burst), periods corresponding to different data flows may be different. Therefore, a period of such type of service may be understood as a dynamic feature of target data.

As described above, for some specific services (such as a URLLC service or an XR service), data volumes (or packet sizes) corresponding to different data packets may also be different. Therefore, a data volume of a service of this type may be understood as a dynamic feature of target data.

In some scenarios, the buffer information of the target data may change with time. Therefore, the buffer information of the target data may be understood as the dynamic feature of the target data.

The time information corresponding to the dynamic change of the target data may be used for a start time and/or an end time corresponding to the dynamic change.

It is assumed that the dynamic feature includes the information about the second delay (for example, delay information in Embodiment 1 and Embodiment 3 below). Correspondingly, the third information includes one or more of the following: information about a transmission delay corresponding to the target data; information about a remaining delay corresponding to the target data; information about a waiting delay corresponding to the target data in a transmission process; information about a PDCP layer arrival time corresponding to the target data; information about an AS layer arrival time corresponding to the target data; or information about a statistical delay of a transmission granularity corresponding to the target data. It should be understood that for related descriptions of the various delay information above, one may refer to descriptions of delay information in Embodiment 1. For brevity, details are not described herein again.

It is assumed that the dynamic feature includes the information indicating the data volume of the target data (for example, data information in Embodiment 2 to Embodiment 3 below). The third information includes one or more of the following: the information indicating the data volume of the target data (also referred to as "information about the data volume"); or information indicating a data volume change of the target data (also referred to as "information about the data volume change").

In some implementations, the information indicating the data volume change of the target data includes one or more of the following: information indicating a change trend of the data volume of the target data; information indicating a characteristic change of the target data; information indicating a data volume change amount of the target data; or information indicating a data volume after the data volume of the target data changes.

It should be noted that for related descriptions of the information about the data volume and/or the information about the data volume change above, one may refer to descriptions in Embodiment 2 to Embodiment 3 below. For brevity, details are not described herein again.

From a perspective of an interaction manner of the first information, in some implementations, the first information may include one or more of the following: information about one-time transmission; information about static interaction; information about semi-static interaction; information about dynamic interaction; or information about real-time interaction.

From a perspective of an interaction manner of the second information, in some implementations, the second information may include one or more of the following: information about one-time transmission; information about static interaction; or information about semi-static interaction.

From a perspective of an interaction manner of the third information, in some implementations, the third information includes one or more of the following: information about dynamic interaction; or information about real-time interaction.

In embodiments of this application, a granularity of the first information (or an object at which the first information is targeted (also referred to as a "first object")) is not limited. In some implementations, the first information includes one or more of the following: information corresponding to one or more LCHs; information corresponding to one or more LCH groups; information corresponding to one or more LCGs; information corresponding to one or more data bursts; information corresponding to one or more QoS flows; information corresponding to one or more PDUs; information corresponding to one or more PDU sets; information corresponding to one or more DRBs; information corresponding to one or more PDU sessions; or information corresponding to a target service.

Alternatively, the first object may include one or more of the following: one or more LCHs; one or more LCH groups; one or more LCGs; one or more data bursts; one or more QoS flows; one or more PDUs; one or more PDU sets; one or more DRBs; one or more PDU sessions; or a target service.

It is assumed that the first object includes one or more LCHs. The one or more LCHs may be any one or more LCHs. Certainly, in embodiments of this application, the one or more LCHs may alternatively be specific one or more LCHs. For example, the one or more LCHs may be one or more LCHs whose priority is lower than that of another LCH that has to-be-transmitted data. For another example, the one or more LCHs may be one or more LCHs whose priority is higher than that of another LCH that has to-be-transmitted data. For another example, the one or more LCHs may be an LCH that has to-be-transmitted data, and a priority of the LCH may not be the highest.

It is assumed that the first object includes one or more LCGs. The one or more LCGs may be any one or more LCGs. Certainly, in embodiments of this application, the one or more LCGs may alternatively be specific one or more LCGs. For example, the one or more LCGs may be one or more LCGs whose priority is lower than that of another LCG that has to-be-transmitted data. For another example, the one or more LCGs may be one or more LCGs whose priority is higher than that of another LCG that has to-be-transmitted data. For another example, the one or more LCGs may be an LCG that has to-be-transmitted data, and a priority of the LCG may not be the highest.

In some implementations, a granularity of the second information may include one or more of the following: one or more target services, one or more QoS flows, one or more pieces of burst data, or one or more PDU sets.

In some other implementations, a granularity of the third information may include one or more of the following: one or more LCHs, one or more LCGs, one or more pieces of burst data, or one or more PDU sets.

In some implementations, the first information is carried in time-sensitive communication assistance information TSCAI; or the first information is carried in a first message, where the first message includes TSCAI; or the first information is carried in a second message, where the second message includes a QoS parameter; or the first information is carried in a QoS flow; or the first information is transmitted together with time-sensitive communication assistance information TSCAI; or the first information is transmitted together with a QoS configuration or a QoS parameter. Certainly, a transmission manner of the first information is not limited in embodiments of this application.

In embodiments of this application, the third information may be transmitted to the access network device together with a BSR MAC CE. Alternatively, the third information may further include uplink-related information. This is not limited in embodiments of this application.

In some implementations, the first information is carried in one or more of the following: a first MAC CE, an SR, or a BSR. For details on a MAC CE format applicable to embodiments of this application, one may refer to the following descriptions. For brevity, details are not described herein again.

In some implementations, the first information may be periodically transmitted, and/or the first information is triggered by an event, and/or the first information is triggered based on a first condition, and/or the target data meets a first threshold. For details on each triggering manner, one may refer to descriptions in Embodiment 1 to Embodiment 3 below. For brevity, details are not described herein again.

In some implementations, if the first information is triggered based on the first condition, the first condition includes one or more of the following: the communications device does not transmit the first information to the access network device; the first information changes; a time at which the first information is transmitted arrives; the target data arrives; the target data is to be transmitted; a feature corresponding to the target data is associated; there is first information to be transmitted; or trigger information of the first information is received. For a triggering manner of the first condition, refer to descriptions in Embodiment 1 to Embodiment 3 below. For brevity, details are not described herein again.

In some implementations, the target data includes one or more of the following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

In some implementations, the first information may be transmitted by the communications device to the access network device based on a request of the access network device. Certainly, in embodiments of this application, the first information may alternatively be actively transmitted by the communications device. The transmission manner of the first information is not limited in embodiments of this application. For details, one may refer to transmission manners or reporting manners described in Embodiment 1 to Embodiment 3 below. The transmission manners or reporting manners described in Embodiment 1 to Embodiment 3 are also applicable to transmission of the first information. For brevity, details are not described herein again.

In some implementations, the foregoing method further includes step S420: the access network device performs configuration based on the first information. The configuration may include one or more of the following operations: executing scheduling, allocating a resource, or configuring a parameter.

To facilitate understanding of this application, the following describes the method according to embodiments of this application with reference to three embodiments. Embodiment 1 is described by using an example in which first information includes delay information, Embodiment 2 is described by using an example in which first information includes data information, and Embodiment 3 is described by using an example in which first information includes delay information and data information.

### Embodiment 1

In some implementations, the delay information may include information related to a delay, or the delay information may include information used to determine a delay.

In some implementations, the delay information may include a total delay of data transmission. For example, the delay information may include statistics on an end-to-end transmission delay corresponding to a data packet of target data. For another example, the delay information may include a delay between a time at which a data packet of target data is transmitted and a time at which an ACK is fed back. For another example, the delay information may include a delay between a time at which a data packet of target data is transmitted and a time at which the data packet is successfully received.

In some implementations, the delay information may include a remaining delay corresponding to target data. For example, the delay information may include a remaining delay corresponding to burst data in the target data. For another example, the delay information may include a remaining delay corresponding to burst data in the target data. For another example, the delay information may include a remaining delay corresponding to a data packet of the target data. For another example, the delay information may include a remaining delay corresponding to a PDU set of the target data. For another example, the delay information may include a remaining delay corresponding to a PDU of the target data.

In some implementations, the remaining delay may correspond to a first duration maintained by a terminal device. For example, the terminal device may maintain the first duration by using a first timer. For another example, the remaining delay may be determined based on one or more of a packet delay budget (packet delay budget, PDB), a PDU set delay budget (PDU set delay budget, PSDB), a waiting time, an arrival time, or a generation duration. For example, the remaining delay may be the PDB minus the waiting time. For example, the remaining delay may be the PDB minus the arrival time. For example, the remaining delay may be the PDB minus the generation time. For example, the remaining delay may be the PSDB minus the waiting time. For example, the remaining delay may be the PSDB minus the arrival time. For example, the remaining delay may be the PSDB minus the generation time.

In some implementations, the first duration or the first timer may be maintained by one or more of RLC, MAC, or PDCP. Optionally, a start time of the first duration or the first timer may be related to a waiting delay of a packet in a buffer, or the start time may be a time of arriving at a PDCP layer or an AS layer.

In some implementations, the first timer may include a packet data convergence protocol (packet data convergence protocol, PDCP) discard timer (PDCP discard timer).

In some implementations, the first timer and/or the first duration may be determined based on a PSDB corresponding to target data and/or a PDB corresponding to target data. For example, the first timer and/or the first duration may be equal to the PSDB corresponding to the target data and/or the PDB corresponding to the target data.

It should be noted that the waiting delay in the buffer may be a duration in a PDCP buffer or an RLC buffer. In some implementations, the waiting delay may be determined based on a time at which a packet arrives at a buffer. For example, the time at which the packet arrives at the buffer may be used as a start time of the waiting delay. The waiting delay is not limited in embodiments of this application.

In some implementations, the delay information may include a waiting delay corresponding to target data. The waiting delay may be understood as a waiting delay in a data transmission process. For example, the waiting delay may be a waiting delay of data in a buffer. For another example, the waiting delay may be a waiting delay after data arrives at a PDCP layer. For another example, the waiting delay may be a waiting delay after data arrives at an access stratum (access stratum, AS) layer. For another example, the waiting delay may be a waiting delay after data arrives at a PDCP layer. For another example, the waiting delay may be a waiting delay after data arrives at an AS layer.

In some implementations, the delay information may include a tolerable transmission delay. In some implementations, the tolerable transmission delay may be determined based on a PSDB corresponding to target data and/or a PDB corresponding to target data.

In some implementations, the delay information may alternatively be delay statistics information. A statistical value may include, for example, a maximum delay value, a minimum delay value, an average delay value, or the like. It should be noted that a statistical object at which the statistical delay value is targeted may be an object of the delay information, and the object of the delay information is described below. For brevity, details are not described herein again.

In embodiments of this application, indication manners of the various delays (such as a total delay, a remaining delay, a waiting delay, a tolerable delay, and delay statistics information) described above are not limited. In some implementations, the delays may be indicated by using delay values. In some other implementations, the delays may be indicated by delay levels. Certainly, in embodiments of this application, the delay may further include an identifier indication related to the delay, where the identifier related to the delay may include, for example, one or more of an identifier indicating a high delay, an identifier indicating a low delay, an identifier indicating that a delay is greater than a threshold, or an identifier indicating that a delay is less than a threshold.

For ease of understanding, the following describes a mapping relationship between an index of a delay level and a delay value with reference to Table 1. Referring to Table 1, different delay level indexes may correspond to different ranges of a delay value. It should be noted that, in the correspondence shown in Table 1, indexes of delay levels being carried by a 5-bit delay field is used as an example for description. Therefore, indexes of 31 types of delay levels may be carried by the 5-bit delay field. In embodiments of this application, a size of the delay field is not specifically limited. For example, the size of the delay field may be 8 bits, 16 bits, or the like.

**Table 1**

| Index | Delay value | Index | Delay value | Index | Delay value | Index | Delay value |
|---|---|---|---|---|---|---|---|
| 0 | 0 | 8 | ≤ H | 16 | ≤ P | 24 | ≤ X |
| 1 | ≤ A | 9 | ≤ I | 17 | ≤ Q | 25 | ≤ Y |
| 2 | ≤ B | 10 | ≤ J | 18 | ≤ R | 26 | ≤ Z |
| 3 | ≤ C | 11 | ≤ K | 19 | ≤ S | 27 | ≤ A1 |
| 4 | ≤ D | 12 | ≤ L | 20 | ≤ T | 28 | ≤ B1 |
| 5 | ≤ E | 13 | ≤ M | 21 | ≤ U | 29 | ≤ C1 |
| 6 | ≤ F | 14 | ≤ N | 22 | ≤ V | 30 | ≤ D1 |
| 7 | ≤ G | 15 | ≤ O | 23 | ≤ W | 31 | >E1 |

In embodiments of this application, the correspondence between an index of a delay level and a delay value may be pre-defined, pre-configured, or dynamically indicated by a network device, which is not limited in embodiments of this application.

The foregoing describes content of the delay information, and the following describes an object at which the delay information is targeted. In embodiments of this application, the object at which the delay information is targeted is not specifically limited. The object at which the delay information is targeted may include one or more of the following: an LCH, an LCH pair, an LCG, a DRB, a QoS flow, a PDU session, a PDU set, a PDU, or burst data. For ease of understanding, the following uses an LCH and an LCG as examples for description. Delay information for another object is similar to the following descriptions. For brevity, details are not described below.

In some implementations, the object at which the delay information is targeted is A or an object triggered by the delay information is A, and an object reported by the delay information is B. In some implementations, A and B are the same. In some other implementations, A and B are different. Optionally, A may include one or more of the following: an LCH, an LCH pair, an LCG, a DRB, a QoS flow, a PDU session, a PDU set, a PDU, a UE, or burst data. Optionally, B may include one or more of the following: an LCH, an LCH pair, an LCG, a DRB, a QoS flow, a PDU session, a PDU set, a PDU, a UE, or burst data.

In some implementations, if the object at which the delay information is targeted is an LCH, the LCH may be a target LCH, and a priority of the target LCH may be higher than that of another LCH that has to-be-transmitted data. Certainly, in embodiments of this application, the priority of the target LCH may not be the highest, that is, the target LCH may be an LCH whose LCH priority is not the highest and that has to-be-transmitted data.

In some other implementations, if the object at which the delay information is targeted is an LCG, the LCG may be a target LCG, and a priority of the target LCG may be higher than that of another LCG that has to-be-transmitted data. Certainly, in embodiments of this application, the priority of the target LCG may not be the highest, that is, the target LCG may be an LCG whose LCG priority is not the highest and that has to-be-transmitted data.

In some implementations, to unify understanding of the object corresponding to the delay information between the access network device and the communications device, first information may carry information (for example, an identifier of the object) indicating the object corresponding to the delay information. Certainly, the object may also be agreed with the communications device in a manner such as being pre-defined, pre-configured, or indicated by the access network device. In this way, the first information may carry the indication information, which is not limited in embodiments of this application.

The foregoing describes the object at which the delay information may be targeted, and the following describes triggering manners of the delay information. In embodiments of this application, a triggering manner of the first information is not limited. For ease of understanding, the following uses triggering manners 1 to 3 as examples for description.

It should be noted that, in embodiments of this application, the delay information may be triggered by a terminal device or a MAC entity. This is not limited in embodiments of this application.

Triggering manner 1: The delay information may be periodically reported. For example, when a period (for example, a periodic timer expires) corresponding to the delay information arrives, the delay information may be transmitted. The period may be pre-defined, pre-configured, or configured by a network device, which is not limited in embodiments of this application.

Triggering manner 2: The delay information may alternatively be triggered by a first condition. In embodiments of this application, the first condition may include one or more of the following implementations of the first condition.

Implementation 1: The first condition includes that a resource that may be used to transmit the delay information exists, or the first condition includes that a resource that is used to transmit the delay information is available.

In some implementations, the resource that may be used to transmit the delay information may include a dedicated resource, and the dedicated resource may include, for example, a dedicated SR resource or a PUCCH resource of a dedicated SR.

In some implementations, the dedicated resource may be understood as a dedicated resource for an object, where the object may include one of data, an LCH, an LCH pair, an LCG, a DRB, a QoS flow, a PDU session, a PDU set, a PDU, or burst data. Certainly, in embodiments of this application, the resource used to transmit the delay information may not be a dedicated resource, that is, other information may also be transmitted on the resource.

In some other implementations, the dedicated resource may be associated with a piece of delay information. For example, when the delay information corresponds to a delay value, the delay information may be transmitted by using the dedicated information. For another example, when the delay information corresponds to a delay level, the delay information may be transmitted by using the dedicated information. Certainly, in embodiments of this application, the dedicated resource may alternatively be associated with a data volume, which is not limited in embodiments of this application.

Implementation 2: The first condition may include that a network device (for example, the access network device) enables the communications device to transmit the delay information. That is, when the network device enables reporting of the delay information, the communications device may transmit the delay information.

Implementation 3: The first condition may include that the object corresponding to the delay information arrives. For example, when the object at which the delay information is targeted is an LCH, the first condition may include that the LCH has to-be-transmitted data. For example, when the object at which the delay information is targeted is an LCG, the first condition may include that to-be-transmitted data of the LCG arrives. For example, when the object at which the delay information is targeted is a PDU set, the first condition may include that a to-be-transmitted PDU set arrives.

Implementation 4: The first condition may include that target data arrives or exists. The target data is not limited in embodiments of this application. In some implementations, the target data may be associated with a delay. For example, the target data may include burst data with a high delay requirement. For example, the target data may include a PDU set with a high delay requirement. For example, the target data may include burst data whose delay is greater than a threshold. For example, the target data may further include burst data whose delay is greater than a threshold.

In some implementations, the target data may be data of a target LCH. The data of the target LCH arriving or existing may include that: the data of the target LCH is available. Certainly, in embodiments of this application, the target data may alternatively be data of a target service.

In some other implementations, the target data may include target characteristic (or target feature) data. The target characteristic may include, for example, a target period and/or a target data rate.

In some other implementations, the target data may be associated with an identifier. For example, the target data may correspond to an LCH associated with a target identifier. For example, the target data may correspond to a service associated with a target identifier. For example, the target data may correspond to a PDU session associated with a target identifier. For example, the target data may correspond to a QoS flow associated with a target identifier.

In some other implementations, the target data may be associated with a target priority. For example, the target data may correspond to an LCH associated with the target priority. For example, the target data may correspond to a service associated with the target priority. For example, the target data may correspond to a PDU session associated with the target priority. For example, the target data may correspond to a QoS flow associated with the target priority.

In some other implementations, the target data may be associated with a target service. For example, the target data may correspond to a PDU session associated with the target service. For another example, the target data may correspond to a QoS flow associated with the target service. For another example, the target data may correspond to an LCH associated with the target service.

In some other implementations, the target data may alternatively be related to a transmission location. In some implementations, the transmission location may include a transmission location in burst data to which data belongs, a transmission location in a data flow (for example, a QoS flow) to which data belongs, or a transmission location in a PDU set to which data belongs. The transmission location may include one or more of being the first to arrive, being the first to be transmitted, being the last to be transmitted, or being the last to arrive. Certainly, the transmission location may alternatively be an intermediate location in a transmission process. This is not limited in embodiments of this application.

For example, the target data may be data that is the first to arrive in burst data to which the target data belongs. For another example, the target data may be data that is the first to arrive in a PDU set to which the target data belongs. For another example, the target data may be data that is the last to arrive in burst data to which the target data belongs. For another example, the target data may be data that is the last to arrive in a PDU set to which the target data belongs. For another example, the target data may be target data (for example, corresponding to a specific transmission location or a specific transmission number) in burst data. For another example, the target data may be data that is the last to arrive in a PDU set to which the target data belongs.

In some other implementations, the target data may include initially transmitted data. For example, the initially transmitted data may include initially transmitted burst data. For example, the initially transmitted data may include an initially transmitted PDU set. For example, the initially transmitted data may include an initially transmitted PDU.

Implementation 5: The first condition may include that data of a target object exists or arrives. In some implementations, the data of the target object may be associated with a delay. For example, the data of the target object may include burst data with a high delay requirement. For another example, the data of the target object may include a PDU set with a high delay requirement. For another example, the data of the target object may include burst data whose delay is greater than a threshold. For another example, the data of the target object may include a PDU set whose delay is greater than a threshold. For another example, the target data may include burst data with a delay requirement. For another example, the target data may include a PDU set with a delay requirement.

In some other implementations, the target data may alternatively be associated with an identifier. For example, the target data may include a PDU set with an important identifier. For another example, the target data may include burst data with an important identifier. For another example, the target data may include a PDU set with a preferential identifier. For another example, the target data may include burst data with a preferential identifier.

In some other implementations, the target data may be related to whether there is a dependency relationship between data, where the dependency relationship may include, for example, whether the data may be independently decoded. For example, the target data may include a PDU set with a dependent identifier. For another example, the target data may include burst data with a dependent identifier. For another example, the target data may include an I frame.

Implementation 6: The first condition may be related to a feature of target data, or in other words, the first condition is determined based on the feature of the target data. The feature may include a dynamic feature or a static feature of the target data. For details, one may refer to the foregoing descriptions.

In some implementations, if the first condition may be related to a delay of the target data, the first condition may include, for example, one or more of the following: the delay of the target data is less than a threshold; a time corresponding to the target data is about to exceed a PDB or a PSDB; a PSDB or PDB corresponding to the target data is less than a threshold; a remaining transmission delay of the target data is less than a threshold; an available (available) time of the target data in a buffer is greater than or equal to a threshold; data that is to be transmitted or not transmitted is included in the target data; or a data volume of an object (that is, the first object described above, for example, a PDU set or burst data) corresponding to the target data is greater than a threshold.

Implementation 7: The first condition may include that the first information changes.

For example, the first information changing may include that: the first information is different from previously reported first information. For another example, the first information changing may include: content of the first information changes. For another example, a change of the first information is greater than or equal to a threshold.

It should be noted that an object at which the first condition is targeted is not limited in embodiments of this application. In some implementations, the object may be one or more of the objects of the first information described above. In some other implementations, the object at which the first condition is targeted may alternatively be a terminal device, where the terminal device may carry, for example, a target service (such as an XR service, a URLLC service, an audio service, or a video service), or the terminal device may be a terminal device that has a capability of carrying the target service. In some other implementations, the object at which the first condition is targeted may alternatively be a MAC entity (for example, may be a specific MAC entity or any MAC entity). In some other implementations, the object at which the first condition is targeted may alternatively be a MAC entity.

Triggering manner 3: The delay information may be triggered based on a first event.

In some implementations, the first event may include one or more of the following: MAC exists; a PDCP exists; an RLC discard packet exists; a peer end (or in other words, a receive end) indicates packet loss; BSR reporting is triggered; a BSR MAC CE is generated; a PUSCH may be used to carry a BSR MAC CE; an enhanced BSR is triggered; or an enhanced BSR MAC CE is generated.

The BSR in the BSR reporting may be any type of BSR described above, which is not limited in embodiments of this application.

The enhanced BSR may be understood as a BSR used to carry the delay information. This type of BSR is not limited in embodiments of this application. In some implementations, the enhanced BSR may be used to carry BSR information of an object of the delay information. With reference to a format of a MAC CE, the following describes a MAC CE that carries an enhanced BSR, which is also referred to as an "enhanced BSR MAC CE".

Triggering manner 4: The access network device requests the delay information.

In some implementations, the access network device may transmit a request 1 to the communications device, to request the first information. Correspondingly, in response to the request 1, the communications device may transmit the first information to the access network device.

In some implementations, after receiving the request 1, the communications device may generate the first information. Certainly, in embodiments of this application, the communications device may alternatively generate the first information and then directly transmit the first information after receiving the request 1. This is not limited in embodiments of this application.

In some implementations, the request 1 may be targeted at an object, where the object may include one or more of the foregoing objects at which the delay information is targeted. Certainly, in embodiments of this application, the object at which the request 1 is targeted may alternatively be determined by a terminal device.

It should be noted that, in embodiments of this application, if the target data meets the triggering manner described above, delay information of the target data may be transmitted. Certainly, if the target data meets the triggering manner described above, in addition to transmitting the delay information of the target data, delay information of other data related to the target data may be transmitted. For example, the other data may belong to a same service as the target data. For example, the other data may belong to a same data flow as the target data. For example, the other data may belong to a same piece of burst data as the target data. For example, the other data may belong to a same PDU set as the target data. For example, the other data may belong to a same QoS flow as the target data.

In some implementations, a network device may further configure whether a terminal device enables a function of reporting delay information (or in other words, transmitting delay information). Certainly, in embodiments of this application, whether the terminal device enables the function may be independently implemented by the terminal device. This is not limited in embodiments of this application.

In embodiments of this application, the network device may configure, by using one or more of RRC, DCI, or a downlink MAC CE, whether the terminal device enables the function. Certainly, in embodiments of this application, the network device may alternatively configure, by using other signalling, whether the terminal device enables the function. This is not limited in embodiments of this application.

In some implementations, the network device may configure, for the terminal device, a configuration related to transmission of the delay information. The configuration may be, for example, a timer (for example, a first timer) related to the delay information, a first condition, or a threshold related to the first condition.

The foregoing describes the triggering manners of the delay information, and the following describes a transmission manner of the delay information. The transmission manner of the delay information is not limited in embodiments of this application. In some implementations, the delay information may be transmitted by using one or more of a first MAC CE, an SR, a BSR, or UAI. Certainly, in embodiments of this application, the delay information may alternatively be carried in a dedicated message, which is not limited in embodiments of this application.

In some implementations, the delay information may be directly carried in an SR. In some other implementations, if a first MAC CE is triggered but there is no proper PUSCH to carry the first MAC CE, or the first MAC CE is triggered but there is no object corresponding to the first MAC CE, an SR may be triggered to carry the delay information. That there is no object corresponding to the first MAC CE may include, for example, that an LCH corresponding to the first MAC CE does not have a data transmission requirement.

In some implementations, if the delay information is transmitted by using an SR, a network device may allocate an SR resource or an SR resource identifier to the delay information, to indicate a resource used to transmit the delay information. In some implementations, one SR may correspond to one or more PUCCH resources. Certainly, in embodiments of this application, one SR may alternatively correspond to one or more PUSCH resources (or in other words, PUSCH resource indexes).

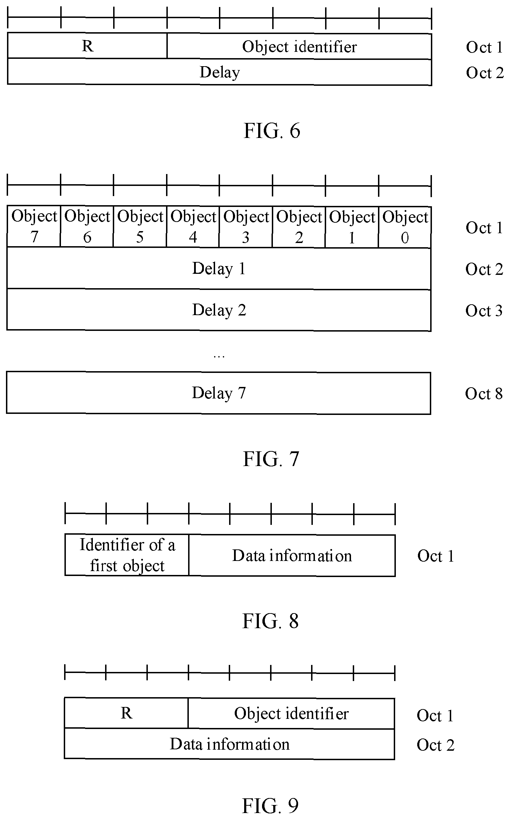

With reference to FIG. 5 to FIG. 7, the following describes implementations of the first MAC CE by using an example in which the delay information is carried by the first MAC CE. Referring to FIG. 5 and FIG. 6, the first MAC CE may be used to report delay information of one object. Referring to FIG. 7, the first MAC CE may be used to report delay information of a plurality of objects.

Referring to FIG. 5, the first MAC CE may carry indication information of a first object and delay information for the first object. The first MAC CE may occupy one byte. Correspondingly, the indication information of the first object may occupy three bits, and the delay information for the first object may occupy five bits.

Referring to FIG. 6, the first MAC CE may carry indication information of a first object and delay information for the first object. The first MAC CE may occupy two bytes. Correspondingly, the indication information of the first object may occupy five bits in a first byte, and the other three bits in the first byte may be reserved bits. The delay information for the first object may occupy eight bits in a second byte.

It should be noted that, for ease of differentiation, in embodiments of this application, an identifier of the first object may be a newly introduced LCID. Correspondingly, after receiving the first MAC CE, a receive end may determine, based on the LCID, that the first MAC CE is used to carry the delay information.

Referring to FIG. 7, the first MAC CE may carry indication information of a plurality of objects and delay information for the plurality of objects. The first MAC CE may occupy eight bytes. Correspondingly, a first byte is used to carry the indication information of the plurality of objects, that is, an object 1 to an object 7, a second byte is used to carry delay information for the object 1, a third byte is used to carry delay information for the object 2, a fourth byte is used to carry delay information for the object 3, a fifth byte is used to carry delay information for the object 4, a sixth byte is used to carry delay information for the object 5, a seventh byte is used to carry delay information for the object 6, and an eighth byte is used to carry delay information for the object 7.

As described above, the delay information may be transmitted by using one or more of a first MAC CE, an SR, a BSR, or UAI. The following describes cases to which the foregoing several types of information are applicable. It should be noted that, examples are only used for description, determining of the foregoing transmission manner is not limited in embodiments of this application. For example, the transmission manner may be configured through protocol pre-definition or pre-configuration. In addition, for ease of description, one transmission of delay information is hereinafter referred to as "first reporting".

In some implementations, if a resource for transmitting the first reporting may be used to transmit the first reporting, the first reporting may be transmitted by using the resource.

For example, if at least one first reporting is triggered, and a UL-SCH resource used for new transmission may carry a MAC CE and a sub-header of the MAC CE, the first MAC CE may be generated.

For another example, if at least one first reporting is triggered and not deleted, and a UL-SCH resource used for new transmission may carry a MAC CE and a sub-header of the MAC CE, the first MAC CE may be generated.

For another example, if at least one first reporting is triggered, and a UL-SCH resource used for new transmission may carry a MAC CE and a sub-header of the MAC CE that carries the first reporting, the first MAC CE may be generated.

For another example, if at least one first reporting is triggered and not deleted, and a UL-SCH resource used for new transmission may be used to transmit a MAC CE and a sub-header of the MAC CE, the first MAC CE may be generated.

For another example, if at least one first reporting is triggered, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered and not deleted, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered, and a UL-SCH resource used for new transmission cannot carry a MAC CE and a sub-header of the MAC CE, or cannot carry a resource of an object corresponding to the first reporting, an SR that carries the first reporting may be generated.

For another example, if at least one first reporting is triggered and not deleted, and a UL-SCH resource used for new transmission cannot carry a first MAC CE and a sub-header of the first MAC CE, an SR of the first reporting may be generated.

For another example, if at least one first reporting is triggered and not deleted, and a UL-SCH resource used for new transmission is a resource that cannot carry an object of the first reporting, an SR of the first reporting may be generated.

For another example, if at least one first reporting is triggered, and a UL-SCH resource used for new transmission cannot carry a MAC CE and a sub-header of the MAC CE, UAI of the first reporting may be generated.

For another example, if at least one first reporting is triggered, and a UL-SCH resource used for new transmission is a resource that cannot carry an object corresponding to the first reporting, UAI of the first reporting may be generated.

For another example, if at least one first reporting is triggered and not deleted, and a UL-SCH resource used for new transmission cannot carry a MAC CE and a sub-header of the MAC CE, UAI of the first reporting may be generated.

For another example, if at least one first reporting is triggered and not deleted, and a UL-SCH resource used for new transmission is a resource that cannot carry a granularity corresponding to the first reporting, UAI of the first reporting may be generated.

For another example, if at least one first reporting is triggered, a terminal device may report UAI.

For another example, if the first reporting is triggered, an SR corresponding to the first reporting is triggered. Optionally, an SR resource or a configuration used to trigger the SR may be related to one or more of delay information, a data priority, or data importance. Optionally, different SRs correspond to different SR configurations (configuration), such as different SR indexes (Scheduling request Id), different SR resource identifiers (scheduling request resource Id), and different PUCCH resource locations. Optionally, each SR may include content of one or more first objects.

In some implementations, in a case of a resource conflict, the SR may be preferentially transmitted, or a terminal device may consider that the SR has a high priority.

It should be noted that in embodiments of this application, one or more first MAC CEs may be carried in a MAC PDU. The first MAC CE may be the newly introduced MAC CE (for example, corresponding to a new LCID) described above. Certainly, the first MAC CE may alternatively be the BSR MAC CE described above. This is not limited in embodiments of this application.

In some scenarios, to avoid confusion, one MAC PDU cannot carry both a first MAC CE and a BSR MAC CE.

In some implementations, a priority of a BSR MAC CE may be the same as that of a first MAC CE. Certainly, in embodiments of this application, the priority of the BSR MAC CE may alternatively be different from that of the first MAC CE. For example, the priority of the first MAC CE may be higher than that of an enhanced BSR (Extended BSR). The BSR MAC CE is an existing MAC CE, or may be an enhanced BSR MAC CE.

### Embodiment 2

In some implementations, the data information may include information about a data volume of target data and/or information about a data volume change corresponding to target data.

In some implementations, if an object at which data information is targeted is A or an object triggered by the data information is A, and an object reported by the data information is B. In some implementations, A and B are the same. In some other implementations, A and B are different. Optionally, A may include one or more of the following: an LCH, an LCH pair, an LCG, a DRB, a QoS flow, a PDU session, a PDU set, a PDU, a UE, or burst data. Optionally, B may include one or more of the following: an LCH, an LCH pair, an LCG, a DRB, a QoS flow, a PDU session, a PDU set, a PDU, a UE, or burst data.

It is assumed that the data information includes the information about the data volume change corresponding to the target data. The information about the data volume change may include at least one of the following: a change trend of the data volume, a change characteristic of the data volume, or a data volume change value of the data volume.

The change trend may include one or more of the following: the data volume becomes larger, the data volume becomes smaller, the data volume is greater than or equal to a threshold, the data volume is less than or equal to a threshold, or a change trend relative to a data volume reported last time.

The change trend of the data volume may include one or more of the following: a change pattern (pattern) of the data volume, a change period of the data volume, a change start time of the data volume, or a change end time of the data volume. The change pattern of the data volume is used to indicate a change trend of the data volume with time.

The data volume change value may include one or more of the following: an increment of the data volume, a decrement of the data volume, an increment compared with a threshold data volume, a decrement compared with a threshold data volume, an increment compared with a baseline data volume, a decrement compared with a baseline data volume, an increment compared with a previously reported data volume (for example, a data volume reported last time), or a decrement compared with a previously reported data volume (for example, a data volume reported last time).

It is assumed that the data information includes the information about the data volume of the target data. In some implementations, the data volume of the target data may include a volume of to-be-transmitted data. In embodiments of this application, the to-be-transmitted data may be targeted at an object, and the object may include one or more of objects at which the first information is targeted. This is not limited in embodiments of this application.

In some implementations, an object at which the information about the data volume is targeted may include one or more LCHs. For example, the information about the data volume may include a volume of to-be-transmitted data of at least one LCH. For another example, the information about the data volume may include a volume of to-be-transmitted data corresponding to a PDU set of at least one LCH.

In some implementations, an object at which the information about the data volume is targeted may include one or more LCGs. For example, the information about the data volume may include a volume of to-be-transmitted data of at least one LCG. For another example, the information about the data volume may include a volume of to-be-transmitted data corresponding to a data burst of at least one LCG. For another example, the information about the data volume may include a volume of to-be-transmitted data of each LCH of at least one LCG. For another example, the information about the data volume may include a volume of to-be-transmitted data corresponding to burst data of each LCH of at least one LCG. For another example, the information about the data volume may include a volume of to-be-transmitted data corresponding to a PDU set of each LCH of at least one LCG.

In some implementations, an object at which the information about the data volume is targeted may include one or more PDU sets. For example, the information about the data volume may include a volume of to-be-transmitted data of at least one PDU set. For example, the information about the data volume may include a volume of to-be-transmitted data corresponding to a PDU set of at least one LCG.

In some implementations, an object at which the information about the data volume is targeted may include one or more PDUs. For example, the information about the data volume may include a volume of to-be-transmitted data of at least one PDU. The PDU may be one or more of the following: a PDU in a terminal device, a PDU in an LCH, a PDU in an LCG, or a PDU in a PDU set.

In some implementations, an object at which the information about the data volume is targeted may include one or more pieces of burst data. For example, the information about the data volume may include a volume of to-be-transmitted data of at least one piece of burst data. The burst data may be one or more of the following: burst data in a terminal device, burst data in an LCH, or burst data in an LCG.

In embodiments of this application, the data volume may be a statistical value. For example, the statistical value may be determined based on a maximum value of to-be-transmitted data. For another example, the statistical value may be determined based on a minimum value of to-be-transmitted data. For another example, the statistical value may be determined based on an average value of to-be-transmitted data. This is not limited in embodiments of this application.

For example, the to-be-transmitted data may include a maximum value of a volume of to-be-transmitted data of at least one data burst. For another example, the to-be-transmitted data may include an average value of a volume of to-be-transmitted data of at least one data burst. For another example, the to-be-transmitted data may include a minimum value of a volume of to-be-transmitted data of at least one data burst. For another example, the to-be-transmitted data may include a volume of to-be-transmitted data of at least one PDU set. For another example, the to-be-transmitted data may include a maximum value of a volume of to-be-transmitted data of at least one PDU set. For another example, the to-be-transmitted data may include an average value of a volume of to-be-transmitted data of at least one PDU set. For another example, the to-be-transmitted data may include a minimum value of a volume of to-be-transmitted data of at least one PDU set.

In embodiments of this application, indication manners of the various data volumes (for example, a data volume or a data volume change amount) described above are not limited. In some implementations, the change amount and the data volume may be indicated by a value of the data volume. In some other implementations, the change amount and the data volume may be indicated by a data volume level. Certainly, in embodiments of this application, the change amount and the data volume may further include an identifier indication related to the data volume, where the identifier related to the data volume may include, for example, one or more of an identifier indicating a high data volume, an identifier indicating a low data volume, an identifier indicating that the data volume is greater than a threshold, or an identifier indicating that the data volume is less than a threshold.

For ease of understanding, the following describes a mapping relationship between an index of a data volume level and a data volume value with reference to Table 2. Referring to Table 2, different data volume level indexes may correspond to different ranges of a data volume value. It should be noted that, in the correspondence shown in Table 2, indexes of data volume levels being carried by a 5-bit data volume field is used as an example for description. Therefore, indexes of 31 types of data volume levels may be carried by the 5-bit data volume field. In embodiments of this application, a size of the data volume field is not specifically limited. For example, the size of the data volume field may be 8 bits, 16 bits, or the like.

**Table 2**

| Index | Data volume value | Index | Data volume value | Index | Data volume value | Index | Data volume value |
|---|---|---|---|---|---|---|---|
| 0 | > A0 | 8 | ≤ H | 16 | ≤ P | 24 | ≤ X |
| 1 | ≤ A | 9 | ≤ I | 17 | ≤ Q | 25 | ≤ Y |
| 2 | ≤ B | 10 | ≤ J | 18 | ≤ R | 26 | ≤ Z |
| 3 | ≤ C | 11 | ≤ K | 19 | ≤ S | 27 | ≤ A1 |
| 4 | ≤ D | 12 | ≤ L | 20 | ≤ T | 28 | ≤ B1 |
| 5 | ≤ E | 13 | ≤ M | 21 | ≤ U | 29 | ≤ C1 |
| 6 | ≤ F | 14 | ≤ N | 22 | ≤ V | 30 | ≤ D1 |
| 7 | ≤ G | 15 | ≤ O | 23 | ≤ W | 31 | > E1 |

In embodiments of this application, A0 may start from 0, or may be greater than or equal to a value, or certainly, may be a number in a BS table in a current communication protocol, for example, may be a maximum value in the BS table in the current communication protocol. This is not limited in embodiments of this application.

The correspondence between an index of a data volume level and a data volume value may be pre-defined, pre-configured, or dynamically indicated by a network device, which is not limited in embodiments of this application.

In addition, in embodiments of this application, a size of the data volume field may be the same as that of a field that carries an index. Certainly, the size of the data volume field may be different from that of the field that carries the index.

In some implementations, the index of the data volume level may alternatively be determined based on a correspondence between an index of a data volume level and a data volume that is specified in a protocol. This is not limited in embodiments of this application.

The foregoing describes content of the data information, and the following describes an object at which the data information is targeted. In embodiments of this application, the object at which the data information is targeted is not specifically limited. The object at which the data information is targeted may include one or more of the following: an LCH, an LCH pair, an LCG, a DRB, a QoS flow, a PDU session, a PDU set, a PDU, or burst data. For ease of understanding, the following uses an LCH and an LCG as examples for description. Data information for another object is similar to the following descriptions. For brevity, details are not described below.

In some implementations, if the object at which the data information is targeted is an LCH, the LCH may be a target LCH, and a priority of the target LCH may be higher than that of another LCH that has to-be-transmitted data. Certainly, in embodiments of this application, the priority of the target LCH may not be the highest, that is, the target LCH may be an LCH whose LCH priority is not the highest and that has to-be-transmitted data.

In some other implementations, if the object at which the data information is targeted is an LCG, the LCG may be a target LCG, and a priority of the target LCG may be higher than that of another LCG that has to-be-transmitted data. Certainly, in embodiments of this application, the priority of the target LCG may not be the highest, that is, the target LCG may be an LCG whose LCG priority is not the highest and that has to-be-transmitted data.

In some implementations, to unify understanding of the object corresponding to the data information between the access network device and the communications device, first information may carry information (for example, an identifier of the object) indicating the object corresponding to the data information. Certainly, the object may also be agreed with the communications device in a manner such as being pre-defined, pre-configured, or indicated by the access network device. In this way, the first information may carry the indication information, which is not limited in embodiments of this application.

The foregoing describes the object at which the data information may be targeted, and the following describes triggering manners of the data information. In embodiments of this application, a triggering manner of the first information is not limited. For ease of understanding, the following uses triggering manners 1 to 3 as examples for description.

It should be noted that in embodiments of this application, the data information may be triggered by a terminal device or a MAC entity. This is not limited in embodiments of this application.

Triggering manner 1: The data information may be periodically reported. For example, when a period corresponding to the data information arrives (for example, a periodic timer expires), the data information may be transmitted. The period may be pre-defined, pre-configured, or configured by a network device, which is not limited in embodiments of this application.

Triggering manner 2: The data information may alternatively be triggered by a first condition. In embodiments of this application, the first condition may include one or more of the following implementations of the first condition.

Implementation 1: The first condition includes that a resource that is used to transmit the data information exists, or the first condition includes that a resource that is used to transmit the data information is available.

In some implementations, the resource that is used to transmit the data information may include a dedicated resource, and the dedicated resource may include, for example, a dedicated SR resource or a PUCCH resource of a dedicated SR.

In some implementations, the dedicated resource may be understood as a dedicated resource for an object, where the object may include one of data, an LCH, an LCH pair, an LCG, a DRB, a QoS flow, a PDU session, a PDU set, a PDU, or burst data. Certainly, in embodiments of this application, the resource used to transmit the data information may not be a dedicated resource, that is, other information may be transmitted on the resource.

In some other implementations, the dedicated resource may be associated with a piece of data information. For example, when the data information corresponds to a data volume value, the data information may be transmitted by using the dedicated information. For another example, when the data information corresponds to a data volume level, the data information may be transmitted by using the dedicated information. Certainly, in embodiments of this application, the dedicated resource may alternatively be associated with a data volume, which is not limited in embodiments of this application.

Implementation 2: The first condition may include that a network device (for example, the access network device) enables the communications device to transmit the data information. That is, when the network device enables reporting of the data information, the communications device may transmit the data information.

Implementation 3: The first condition may include that the object corresponding to the data information arrives. For example, when the object at which the data information is targeted is an LCH, the first condition may include that the LCH has to-be-transmitted data. For example, when the object at which the data information is targeted is an LCG, the first condition may include that to-be-transmitted data of the LCG arrives. For example, when the object at which the data information is targeted is a PDU set, the first condition may include that a to-be-transmitted PDU set arrives.

Implementation 4: The first condition may include that target data arrives or exists. The target data is not limited in embodiments of this application. In some implementations, the target data may be associated with a data volume. For example, the target data may include burst data with a high data volume requirement. For example, the target data may include a PDU set with a high data volume requirement. For example, the target data may include burst data whose data volume is greater than a threshold. For example, the target data may further include burst data whose data volume is greater than a threshold.

In some implementations, the target data may be associated with a delay. For example, the target data may include burst data with a high delay requirement. For example, the target data may include a PDU set with a high delay requirement. For example, the target data may include burst data whose delay is greater than a threshold. For example, the target data may further include burst data whose delay is greater than a threshold.

In some implementations, the target data may be data of a target LCH. The data of the target LCH arriving or existing may include that: the data of the target LCH is available. Certainly, in embodiments of this application, the target data may alternatively be data of a target service.

In some other implementations, the target data may include target characteristic (or target feature) data. The target characteristic may include, for example, a target period and/or a target data rate.

In some other implementations, the target data may be associated with an identifier. For example, the target data may correspond to an LCH associated with a target identifier. For example, the target data may correspond to a service associated with a target identifier. For example, the target data may correspond to a PDU session associated with a target identifier. For example, the target data may correspond to a QoS flow associated with a target identifier.

In some other implementations, the target data may be associated with a target priority. For example, the target data may correspond to an LCH associated with the target priority. For example, the target data may correspond to a service associated with the target priority. For example, the target data may correspond to a PDU session associated with the target priority. For example, the target data may correspond to a QoS flow associated with the target priority.

In some other implementations, the target data may be associated with a target service. For example, the target data may correspond to a PDU session associated with the target service. For another example, the target data may correspond to a QoS flow associated with the target service. For another example, the target data may correspond to an LCH associated with the target service.

In some other implementations, the target data may alternatively be related to a transmission location. In some implementations, the transmission location may include a transmission location in burst data to which data belongs, a transmission location in a data flow (for example, a QoS flow) to which data belongs, or a transmission location in a PDU set to which data belongs. The transmission location may include one or more of being the first to arrive, being the first to be transmitted, being the last to be transmitted, or being the last to arrive. Certainly, the transmission location may alternatively be an intermediate location in a transmission process. This is not limited in embodiments of this application.

For example, the target data may be data that is the first to arrive in burst data to which the target data belongs. For another example, the target data may be data that is the first to arrive in a PDU set to which the target data belongs. For another example, the target data may be data that is the last to arrive in burst data to which the target data belongs. For another example, the target data may be data that is the last to arrive in a PDU set to which the target data belongs. For another example, the target data may be target data (for example, corresponding to a specific transmission location or a specific transmission number) in burst data. For another example, the target data may be data that is the last to arrive in a PDU set to which the target data belongs.

In some other implementations, the target data may include initially transmitted data. For example, the initially transmitted data may include initially transmitted burst data. For example, the initially transmitted data may include an initially transmitted PDU set. For example, the initially transmitted data may include an initially transmitted PDU.

Implementation 5: The first condition may include that data of a target object exists or arrives. In some implementations, the data of the target object may be associated with a data volume. For example, the data of the target object may include burst data with a high data volume requirement. For another example, the data of the target object may include a PDU set with a high data volume requirement. For another example, the data of the target object may include burst data whose data volume is greater than a threshold. For another example, the data of the target object may include a PDU set whose data volume is greater than a threshold. For another example, the target data may include burst data with a data volume requirement. For another example, the target data may include a PDU set with a data volume requirement.

In some other implementations, the target data may alternatively be associated with an identifier. For example, the target data may include a PDU set with an important identifier. For another example, the target data may include burst data with an important identifier. For another example, the target data may include a PDU set with a preferential identifier. For another example, the target data may include burst data with a preferential identifier.

In some other implementations, the target data may be related to whether there is a dependency relationship between data, where the dependency relationship may include, for example, whether the data may be independently decoded. For example, the target data may include a PDU set with a dependent identifier. For another example, the target data may include burst data with a dependent identifier. For another example, the target data may include an I frame.

Implementation 6: The first condition may be related to a feature of target data, or in other words, the first condition is determined based on the feature of the target data. The feature may include a dynamic feature or a static feature of the target data. For details, one may refer to the foregoing descriptions.

In some implementations, if the first condition may be related to a delay of the target data, the first condition may include, for example, one or more of the following: the delay of the target data is less than a threshold; a time corresponding to the target data is about to exceed a PDB or a PSDB; a PSDB or PDB corresponding to the target data is less than a threshold; a remaining transmission delay of the target data is less than a threshold; an available (available) time of the target data in a buffer is greater than or equal to a threshold; data that is to be transmitted or not transmitted is included in the target data; or a data volume of an object (that is, the first object described above, for example, a PDU set or burst data) corresponding to the target data is greater than a threshold.

In some implementations, if the first condition may be related to the data volume of the target data, the first condition may include, for example, one or more of the following: the data volume of the target data is less than a threshold; a volume of remaining transmitted data of the target data is less than a threshold; data that is to be transmitted or not transmitted is included in the target data; or a data volume of an object (that is, the first object described above, for example, a PDU set or burst data) corresponding to the target data is greater than a threshold.

Implementation 7: The first condition may include that the first information changes.

For example, the first information changing may include that: the first information is different from previously reported first information. For another example, the first information changing may include that: content of the first information changes. For another example, a change of the first information is greater than or equal to a threshold.

It should be noted that an object at which the first condition is targeted is not limited in embodiments of this application. In some implementations, the object may be one or more of the objects of the first information described above. In some other implementations, the object at which the first condition is targeted may alternatively be a terminal device, where the terminal device may carry, for example, a target service (such as an XR service, a URLLC service, an audio service, or a video service), or the terminal device may be a terminal device that has a capability of carrying the target service. In some other implementations, the object at which the first condition is targeted may alternatively be a MAC entity (for example, may be a specific MAC entity or any MAC entity). In some other implementations, the object at which the first condition is targeted may alternatively be a MAC entity.

Triggering manner 3: The data information may be triggered based on a first event.

In some implementations, the first event may include one or more of the following: MAC exists; a PDCP exists; an RLC discard packet exists; a peer end (or in other words, a receive end) indicates packet loss; BSR reporting is triggered; a BSR MAC CE is generated; a PUSCH may be used to carry a BSR MAC CE; an enhanced BSR is triggered; or an enhanced BSR MAC CE is generated.

The BSR in the BSR reporting may be any type of BSR described above, which is not limited in embodiments of this application.

The enhanced BSR may be understood as a BSR used to carry the data information. This type of BSR is not limited in embodiments of this application. In some implementations, the enhanced BSR may be used to carry BSR information of an object of the data information. With reference to a format of a MAC CE, the following describes a MAC CE that carries an enhanced BSR, which is also referred to as an "enhanced BSR MAC CE".

Triggering manner 4: The access network device requests the data information.

In some implementations, the access network device may transmit a request 1 to the communications device, to request the first information. Correspondingly, in response to the request 1, the communications device may transmit the first information to the access network device.

In some implementations, after receiving the request 1, the communications device may generate the first information. Certainly, in embodiments of this application, the communications device may alternatively generate the first information and then directly transmit the first information after receiving the request 1. This is not limited in embodiments of this application.

In some implementations, the request 1 may be targeted at an object, where the object may include one or more of the foregoing objects at which the data information is targeted. Certainly, in embodiments of this application, the object at which the request 1 is targeted may alternatively be determined by a terminal device.

It should be noted that, in embodiments of this application, if the target data meets the triggering manner described above, the data information of the target data may be transmitted. Certainly, if the target data meets the triggering manner described above, in addition to transmitting the data information of the target data, data information of other data related to the target data may also be transmitted. For example, the other data may belong to a same service as the target data. For example, the other data may belong to a same data flow as the target data. For example, the other data may belong to a same piece of burst data as the target data. For example, the other data may belong to a same PDU set as the target data. For example, the other data may belong to a same QoS flow as the target data.

In some implementations, a network device may further configure whether a terminal device enables a function of reporting data information (or in other words, transmitting data information). Certainly, in embodiments of this application, whether the terminal device enables the function may be independently implemented by the terminal device. This is not limited in embodiments of this application.

In embodiments of this application, the network device may configure, by using one or more of RRC, DCI, or a downlink MAC CE, whether the terminal device enables the function. Certainly, in embodiments of this application, the network device may alternatively configure, by using other signalling, whether the terminal device enables the function. This is not limited in embodiments of this application.

In some implementations, the network device may configure, for the terminal device, a configuration related to transmission of the data information. The configuration may be, for example, a timer (for example, a first timer) related to the data information, a first condition, or a threshold related to the first condition.

The foregoing describes the triggering manners of the data information, and the following describes a transmission manner of the data information. The transmission manner of the data information is not limited in embodiments of this application. In some implementations, the data information may be transmitted by using one or more of a first MAC CE, an SR, a BSR, or UAI. Certainly, in embodiments of this application, the data information may alternatively be carried in a dedicated message, which is not limited in embodiments of this application.

In some implementations, the data information may be directly carried in an SR. In some other implementations, if a first MAC CE is triggered but there is no proper PUSCH to carry the first MAC CE, or the first MAC CE is triggered but there is no object corresponding to the first MAC CE, an SR may be triggered to carry the data information. That there is no object corresponding to the first MAC CE may include, for example, an LCH corresponding to the first MAC CE does not have a data transmission requirement.

In some implementations, if the data information is transmitted by using an SR, a network device may allocate an SR resource or an SR resource identifier to the data information, to indicate a resource used to transmit the data information. In some implementations, one SR may correspond to one or more PUCCH resources. Certainly, in embodiments of this application, one SR may alternatively correspond to one or more PUSCH resources (or in other words, PUSCH resource indexes).

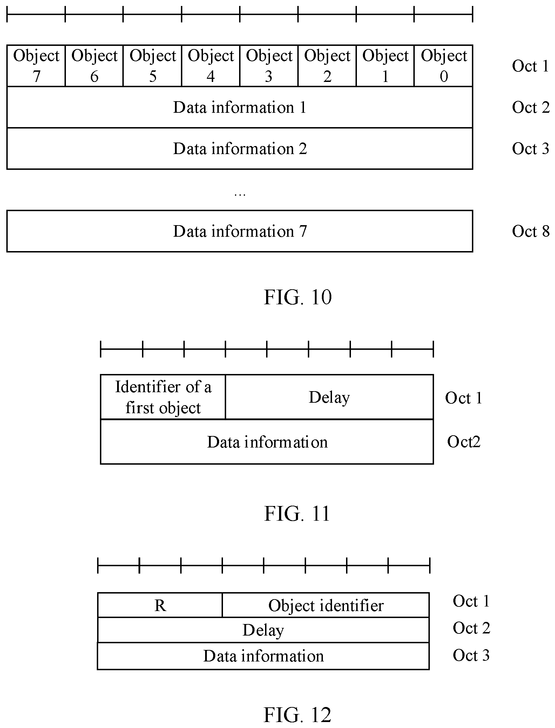

With reference to FIG. 8 to FIG. 10, the following describes implementations of the first MAC CE by using an example in which the data information is carried by the first MAC CE. Referring to FIG. 8 and FIG. 9, the first MAC CE may be used to report data information of one object. Referring to FIG. 10, the first MAC CE may be used to report data information of a plurality of objects.

Referring to FIG. 8, the first MAC CE may carry indication information of a first object and data information for the first object. The first MAC CE may occupy one byte. Correspondingly, the indication information of the first object may occupy three bits, and the data information for the first object may occupy five bits.

Referring to FIG. 9, the first MAC CE may carry indication information of the first object and data information for the first object. The first MAC CE may occupy two bytes. Correspondingly, the indication information of the first object may occupy five bits in a first byte, and the other three bits in the first byte may be reserved bits. The data information for the first object may occupy eight bits in a second byte.

It should be noted that, for ease of differentiation, in embodiments of this application, an identifier of the first object may be a newly introduced LCID. Correspondingly, after receiving the first MAC CE, a receive end may determine, based on the LCID, that the first MAC CE is used to carry the data information.

Referring to FIG. 10, the first MAC CE may carry indication information of a plurality of objects and data information for the plurality of objects. The first MAC CE may occupy eight bytes. Correspondingly, a first byte is used to carry the indication information of the plurality of objects, that is, an object 1 to an object 7, a second byte is used to carry data information for the object 1, a third byte is used to carry data information for the object 2, a fourth byte is used to carry data information for the object 3, a fifth byte is used to carry data information for the object 4, a sixth byte is used to carry data information for the object 5, a seventh byte is used to carry data information for the object 6, and an eighth byte is used to carry data information for the object 7.

As described above, the data information may be transmitted by using one or more of a first MAC CE, an SR, a BSR, or UAI. The following describes cases to which the foregoing several types of information are applicable. It should be noted that, examples are only used for description, determining of the foregoing transmission manner is not limited in embodiments of this application. For example, the transmission manner may be configured through protocol pre-definition or pre-configuration. In addition, for ease of description, one transmission of data information is hereinafter referred to as "first reporting".

In some implementations, if a resource used to transmit the first reporting may be used to transmit the first reporting, the first reporting may be transmitted by using the resource.

For example, if at least one first reporting is triggered, and a UL-SCH resource used for new transmission may carry a MAC CE and a sub-header of the MAC CE, the first MAC CE may be generated.

For another example, if at least one first reporting is triggered and not deleted, and a UL-SCH resource used for new transmission may carry a MAC CE and a sub-header of the MAC CE, the first MAC CE may be generated.

For another example, if at least one first reporting is triggered, and a UL-SCH resource used for new transmission may carry a MAC CE and a sub-header of the MAC CE that carries the first reporting, the first MAC CE may be generated.

For another example, if at least one first reporting is triggered and not deleted, and a UL-SCH resource used for new transmission may be used to transmit a MAC CE and a sub-header of the MAC CE, the first MAC CE may be generated.

For another example, if at least one first reporting is triggered, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered and not deleted, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered, and a UL-SCH resource used for new transmission cannot carry a MAC CE and a sub-header of the MAC CE, or cannot carry a resource of an object corresponding to the first reporting, an SR that carries the first reporting may be generated.

For another example, if at least one first reporting is triggered and not deleted, and a UL-SCH resource used for new transmission cannot carry a first MAC CE and a sub-header of the first MAC CE, an SR of the first reporting may be generated.

For another example, if at least one first reporting is triggered and not deleted, and a UL-SCH resource used for new transmission is a resource that cannot carry an object of the first reporting, an SR of the first reporting may be generated.

For another example, if at least one first reporting is triggered, and a UL-SCH resource used for new transmission cannot carry a MAC CE and a sub-header of the MAC CE, UAI of the first reporting may be generated.

For another example, if at least one first reporting is triggered, and a UL-SCH resource used for new transmission is a resource that cannot carry an object corresponding to the first reporting, UAI of the first reporting may be generated.

For another example, if at least one first reporting is triggered and not deleted, and a UL-SCH resource used for new transmission cannot carry a MAC CE and a sub-header of the MAC CE, UAI of the first reporting may be generated.

For another example, if at least one first reporting is triggered and not deleted, and a UL-SCH resource used for new transmission is a resource that cannot carry a granularity corresponding to the first reporting, UAI of the first reporting may be generated.

For another example, if at least one first reporting is triggered, a terminal device may report UAI.

For another example, if the first reporting is triggered, an SR corresponding to the first reporting is triggered. Optionally, an SR resource or a configuration used to trigger the SR may be related to one or more of data information, a data priority, or data importance. Optionally, different SRs correspond to different SR configurations (configuration), such as different SR indexes (Scheduling request Id), different SR resource identifiers (scheduling request resource Id), and different PUCCH resource locations. Optionally, each SR may include content of one or more first objects.

In some implementations, in a case of a resource conflict, the SR may be preferentially transmitted, or a terminal device may consider that the SR has a high priority.

It should be noted that in embodiments of this application, one or more first MAC CEs may be carried in a MAC PDU. The first MAC CE may be the newly introduced MAC CE (for example, corresponding to a new LCID) described above. Certainly, the first MAC CE may alternatively be the BSR MAC CE described above. This is not limited in embodiments of this application.

In some scenarios, to avoid confusion, one MAC PDU cannot carry both a first MAC CE and a BSR MAC CE.

In some implementations, a priority of a BSR MAC CE may be the same as that of a first MAC CE. Certainly, in embodiments of this application, the priority of the BSR MAC CE may alternatively be different from that of the first MAC CE. For example, the priority of the first MAC CE may be higher than that of an enhanced BSR (Extended BSR). The BSR MAC CE is an existing MAC CE, or may be an enhanced BSR MAC CE.

As described above, the correspondence between an index of a data volume level and a data volume value may be determined based on a correspondence defined in a current communication protocol ("an existing correspondence" for short), or a new correspondence provided in embodiments of this application ("a new correspondence" for short). Therefore, to unify understanding between a transmit end and a receive end of data information, a scenario in which the two correspondences are used may be specified.

In some implementations, in a case in which the first reporting is triggered or used (for example, data information is reported), the new correspondence may be used; otherwise, the existing correspondence is used.

In some other implementations, in a case in which the first reporting is triggered or used (for example, data information is greater than or equal to a threshold), the new correspondence may be used; otherwise, the existing correspondence is used.

In some other implementations, in a case in which the communications device (for example, a terminal device) has a capability of reporting the first reporting, and/or data of a corresponding object exists, the new correspondence may be used; otherwise, the existing correspondence is used.

In some other implementations, in a case in which the communications device (for example, a terminal device) has a capability of reporting the first reporting, and/or data of a corresponding object exists (for example, a data volume indicated by data information is greater than or equal to a threshold), the new correspondence may be used; otherwise, the existing correspondence is used.

In some other implementations, a network device may instruct to use the new correspondence or the existing correspondence. In some other implementations, a network device may instruct to use the new correspondence or a specific correspondence among the existing correspondence. The instruction may be targeted at a terminal device, a MAC entity, an LCH, an LCG, burst data, or a PDU set.

### Embodiment 3

In some implementations, the first information may include delay information and data information, where a meaning of the delay information is similar to that of the delay information described in Embodiment 1. For details, one may refer to the descriptions in Embodiment 1. A meaning of the data information is similar to that of the data information described in Embodiment 2. For details, one may refer to the descriptions in Embodiment 2.

In some implementations, an object at which delay information and/or data information is targeted is A or an object triggered by the delay information and/or the data information is A, and an object reported by the delay information and/or the data information is B. In some implementations, A and B are the same. In some other implementations, A and B are different. Optionally, A may include one or more of the following: an LCH, an LCH pair, an LCG, a DRB, a QoS flow, a PDU session, a PDU set, a PDU, a UE, or burst data. Optionally, B may include one or more of the following: an LCH, an LCH pair, an LCG, a DRB, a QoS flow, a PDU session, a PDU set, a PDU, a UE, or burst data.

The following describes an object at which the first information is targeted. In embodiments of this application, the object at which the first information is targeted is not specifically limited. The object at which the first information is targeted may include one or more of the following: an LCH, an LCH pair, an LCG, a DRB, a QoS flow, a PDU session, a PDU set, a PDU, or burst data. For ease of understanding, the following uses an LCH and an LCG as examples for description. First information for another object is similar to the following descriptions. For brevity, details are not described below.

In some implementations, if the object at which the first information is targeted is an LCH, the LCH may be a target LCH, and a priority of the target LCH may be higher than that of another LCH that has to-be-transmitted data. Certainly, in embodiments of this application, the priority of the target LCH may not be the highest, that is, the target LCH may be an LCH whose LCH priority is not the highest and that has to-be-transmitted data.

In some other implementations, if the object at which the first information is targeted is an LCG, the LCG may be a target LCG, and a priority of the target LCG may be higher than that of another LCG that has to-be-transmitted data. Certainly, in embodiments of this application, the priority of the target LCG may not be the highest, that is, the target LCG may be an LCG whose LCG priority is not the highest and that has to-be-transmitted data.

In some implementations, to unify understanding of the object corresponding to the first information between the access network device and the communications device, the first information may carry information (for example, an identifier of the object) indicating the object corresponding to the first information. Certainly, the object may also be agreed with the communications device in a manner such as being pre-defined, pre-configured, or indicated by the access network device. In this way, the first information may carry the indication information, which is not limited in embodiments of this application.

The foregoing describes the object at which the first information may be targeted, and the following describes triggering manners of the first information. In embodiments of this application, a triggering manner of the first information is not limited. For ease of understanding, the following uses triggering manners 1 to 3 as examples for description.

It should be noted that in embodiments of this application, the first information may be triggered by a terminal device or a MAC entity. This is not limited in embodiments of this application.

Triggering manner 1: The first information may be periodically reported. For example, when a period corresponding to the first information arrives (for example, a periodic timer expires), the first information may be transmitted. The period may be pre-defined, pre-configured, or configured by a network device, which is not limited in embodiments of this application.

Triggering manner 2: The first information may alternatively be triggered by a first condition. In embodiments of this application, the first condition may include one or more of the following implementations of the first condition.

Implementation 1: The first condition includes that a resource that may be used to transmit the first information exists, or the first condition includes that a resource that is used to transmit the first information is available.

In some implementations, the resource that may be used to transmit the first information may include a dedicated resource, and the dedicated resource may include, for example, a dedicated SR resource or a PUCCH resource of a dedicated SR.

In some implementations, the dedicated resource may be understood as a dedicated resource for an object, where the object may include one of data, an LCH, an LCH pair, an LCG, a DRB, a QoS flow, a PDU session, a PDU set, a PDU, or burst data. Certainly, in embodiments of this application, the resource used to transmit the first information may not be a dedicated resource, that is, other information may also be transmitted on the resource.

In some other implementations, the dedicated resource may be associated with a piece of first information. For example, when the first information corresponds to a data volume value, the first information may be transmitted by using the dedicated information. For another example, when the first information corresponds to a data volume level, the first information may be transmitted by using the dedicated information. Certainly, in embodiments of this application, the dedicated resource may alternatively be associated with a data volume, which is not limited in embodiments of this application.

Implementation 2: The first condition may include that a network device (for example, the access network device) enables the communications device to transmit the first information. That is, when the network device enables reporting of the first information, the communications device may transmit the first information.

Implementation 3: The first condition may include that the object corresponding to the first information arrives. For example, when the object at which the first information is targeted is an LCH, the first condition may include that the LCH has to-be-transmitted data. For example, when the object at which the first information is targeted is an LCG, the first condition may include that to-be-transmitted data of the LCG arrives. For example, when the object at which the first information is targeted is a PDU set, the first condition may include that a to-be-transmitted PDU set arrives.

Implementation 4: The first condition may include that target data arrives or exists. The target data is not limited in embodiments of this application. In some implementations, the target data may be associated with a data volume. For example, the target data may include burst data with a high data volume requirement. For example, the target data may include a PDU set with a high data volume requirement. For example, the target data may include burst data whose data volume is greater than a threshold. For example, the target data may further include burst data whose data volume is greater than a threshold.

In some implementations, the target data may be associated with a delay. For example, the target data may include burst data with a high delay requirement. For example, the target data may include a PDU set with a high delay requirement. For example, the target data may include burst data whose delay is greater than a threshold. For example, the target data may further include burst data whose delay is greater than a threshold.

In some implementations, the target data may be data of a target LCH. The data of the target LCH arriving or existing may include that: the data of the target LCH is available. Certainly, in embodiments of this application, the target data may alternatively be data of a target service.

In some other implementations, the target data may include target characteristic (or target feature) data. The target characteristic may include, for example, a target period and/or a target data rate.

In some other implementations, the target data may be associated with an identifier. For example, the target data may correspond to an LCH associated with a target identifier. For example, the target data may correspond to a service associated with a target identifier. For example, the target data may correspond to a PDU session associated with a target identifier. For example, the target data may correspond to a QoS flow associated with a target identifier.

In some other implementations, the target data may be associated with a target priority. For example, the target data may correspond to an LCH associated with the target priority. For example, the target data may correspond to a service associated with the target priority. For example, the target data may correspond to a PDU session associated with the target priority. For example, the target data may correspond to a QoS flow associated with the target priority.

In some other implementations, the target data may be associated with a target service. For example, the target data may correspond to a PDU session associated with the target service. For another example, the target data may correspond to a QoS flow associated with the target service. For another example, the target data may correspond to an LCH associated with the target service.

In some other implementations, the target data may alternatively be related to a transmission location. In some implementations, the transmission location may include a transmission location in burst data to which data belongs, a transmission location in a data flow (for example, a QoS flow) to which data belongs, or a transmission location in a PDU set to which data belongs. The transmission location may include one or more of being the first to arrive, being the first to be transmitted, being the last to be transmitted, or being the last to arrive. Certainly, the transmission location may alternatively be an intermediate location in a transmission process. This is not limited in embodiments of this application.

For example, the target data may be data that is the first to arrive in burst data to which the target data belongs. For another example, the target data may be data that is the first to arrive in a PDU set to which the target data belongs. For another example, the target data may be data that is the last to arrive in burst data to which the target data belongs. For another example, the target data may be data that is the last to arrive in a PDU set to which the target data belongs. For another example, the target data may be target data (for example, corresponding to a specific transmission location or a specific transmission number) in burst data. For another example, the target data may be data that is the last to arrive in a PDU set to which the target data belongs.

In some other implementations, the target data may include initially transmitted data. For example, the initially transmitted data may include initially transmitted burst data. For example, the initially transmitted data may include an initially transmitted PDU set. For example, the initially transmitted data may include an initially transmitted PDU.

Implementation 5: The first condition may include that data of a target object exists or arrives. In some implementations, the data of the target object may be associated with a data volume. For example, the data of the target object may include burst data with a high data volume requirement. For another example, the data of the target object may include a PDU set with a high data volume requirement. For another example, the data of the target object may include burst data whose data volume is greater than a threshold. For another example, the data of the target object may include a PDU set whose data volume is greater than a threshold. For another example, the target data may include burst data with a data volume requirement. For another example, the target data may include a PDU set with a data volume requirement.

In some other implementations, the target data may alternatively be associated with an identifier. For example, the target data may include a PDU set with an important identifier. For another example, the target data may include burst data with an important identifier. For another example, the target data may include a PDU set with a preferential identifier. For another example, the target data may include burst data with a preferential identifier.

In some other implementations, the target data may be related to whether there is a dependency relationship between data, where the dependency relationship may include, for example, whether the data may be independently decoded. For example, the target data may include a PDU set with a dependent identifier. For another example, the target data may include burst data with a dependent identifier. For another example, the target data may include an I frame.

Implementation 6: The first condition may be related to a feature of target data, or in other words, the first condition is determined based on the feature of the target data. The feature may include a dynamic feature or a static feature of the target data. For details, one may refer to the foregoing descriptions.

In some implementations, if the first condition may be related to a delay of the target data, the first condition may include, for example, one or more of the following: the delay of the target data is less than a threshold; a time corresponding to the target data is about to exceed a PDB or a PSDB; a PSDB or PDB corresponding to the target data is less than a threshold; a remaining transmission delay of the target data is less than a threshold; an available (available) time of the target data in a buffer is greater than or equal to a threshold; data that is to be transmitted or not transmitted is included in the target data; or a data volume of an object (that is, the first object described above, for example, a PDU set or burst data) corresponding to the target data is greater than a threshold.

In some implementations, if the first condition may be related to the data volume of the target data, the first condition may include, for example, one or more of the following: the data volume of the target data is less than a threshold; a volume of remaining transmitted data of the target data is less than a threshold; data that is to be transmitted or not transmitted is included in the target data; or a data volume of an object (that is, the first object described above, for example, a PDU set or burst data) corresponding to the target data is greater than a threshold.

Implementation 7: The first condition may include that the first information changes.

For example, the first information changing may include that: the first information is different from previously reported first information. For another example, the first information changing may include: content of the first information changes. For another example, a change of the first information is greater than or equal to a threshold.

It should be noted that an object at which the first condition is targeted is not limited in embodiments of this application. In some implementations, the object may be one or more of the objects of the first information described above. In some other implementations, the object at which the first condition is targeted may alternatively be a terminal device, where the terminal device may carry, for example, a target service (such as an XR service, a URLLC service, an audio service, or a video service), or the terminal device may be a terminal device that has a capability of carrying the target service. In some other implementations, the object at which the first condition is targeted may alternatively be a MAC entity (for example, may be a specific MAC entity or any MAC entity). In some other implementations, the object at which the first condition is targeted may alternatively be a MAC entity.

Triggering manner 3: The first information may be triggered based on a first event.

In some implementations, the first event may include one or more of the following: MAC exists; a PDCP exists; an RLC discard packet exists; a peer end (or in other words, a receive end) indicates packet loss; BSR reporting is triggered; a BSR MAC CE is generated; a PUSCH may be used to carry a BSR MAC CE; an enhanced BSR is triggered; or an enhanced BSR MAC CE is generated.

The BSR in the BSR reporting may be any type of BSR described above, which is not limited in embodiments of this application.

The enhanced BSR may be understood as a BSR used to carry the first information. This type of BSR is not limited in embodiments of this application. In some implementations, the enhanced BSR may be used to carry BSR information of an object of the first information. With reference to a format of a MAC CE, the following describes a MAC CE that carries an enhanced BSR, which is also referred to as an "enhanced BSR MAC CE".

Triggering manner 4: The access network device requests the first information.

In some implementations, the access network device may transmit a request 1 to the communications device, to request the first information. Correspondingly, in response to the request 1, the communications device may transmit the first information to the access network device.

In some implementations, after receiving the request 1, the communications device may generate the first information. Certainly, in embodiments of this application, the communications device may alternatively generate the first information and then directly transmit the first information after receiving the request 1. This is not limited in embodiments of this application.

In some implementations, the request 1 may be targeted at an object, where the object may include one or more of the foregoing objects at which the first information is targeted. Certainly, in embodiments of this application, the object at which the request 1 is targeted may alternatively be determined by a terminal device.

It should be noted that, in embodiments of this application, if the target data meets the triggering manner described above, the first information of the target data may be transmitted. Certainly, if the target data meets the triggering manner described above, in addition to transmitting the first information of the target data, first information of other data related to the target data may be transmitted. For example, the other data may belong to a same service as the target data. For example, the other data may belong to a same data flow as the target data. For example, the other data may belong to a same piece of burst data as the target data. For example, the other data may belong to a same PDU set as the target data. For example, the other data may belong to a same QoS flow as the target data.

In some implementations, a network device may further configure whether a terminal device enables a function of reporting first information (or in other words, transmitting first information). Certainly, in embodiments of this application, whether the terminal device enables the function may be independently implemented by the terminal device. This is not limited in embodiments of this application.

In embodiments of this application, the network device may configure, by using one or more of RRC, DCI, or a downlink MAC CE, whether the terminal device enables the function. Certainly, in embodiments of this application, the network device may alternatively configure, by using other signalling, whether the terminal device enables the function. This is not limited in embodiments of this application.

In some implementations, the network device may configure, for the terminal device, a configuration related to transmission of the first information. The configuration may be, for example, a timer (for example, a first timer) related to the first information, a first condition, or a threshold related to the first condition.

The foregoing describes the triggering manners of the first information, and the following describes a transmission manner of the first information. The transmission manner of the first information is not limited in embodiments of this application. In some implementations, the first information may be transmitted by using one or more of a first MAC CE, an SR, a BSR, or UAI. Certainly, in embodiments of this application, the first information may alternatively be carried in a dedicated message, which is not limited in embodiments of this application.

In some implementations, the first information may be directly carried in an SR. In some other implementations, if a first MAC CE is triggered but there is no proper PUSCH to carry the first MAC CE, or the first MAC CE is triggered but there is no object corresponding to the first MAC CE, an SR may be triggered to carry the first information. That there is no object corresponding to the first MAC CE may include, for example, an LCH corresponding to the first MAC CE does not have a data transmission requirement.

In some implementations, if the first information is transmitted by using an SR, a network device may allocate an SR resource or an SR resource identifier to the first information, to indicate a resource used to transmit the first information. In some implementations, one SR may correspond to one or more PUCCH resources. Certainly, in embodiments of this application, one SR may alternatively correspond to one or more PUSCH resources (or in other words, PUSCH resource indexes).

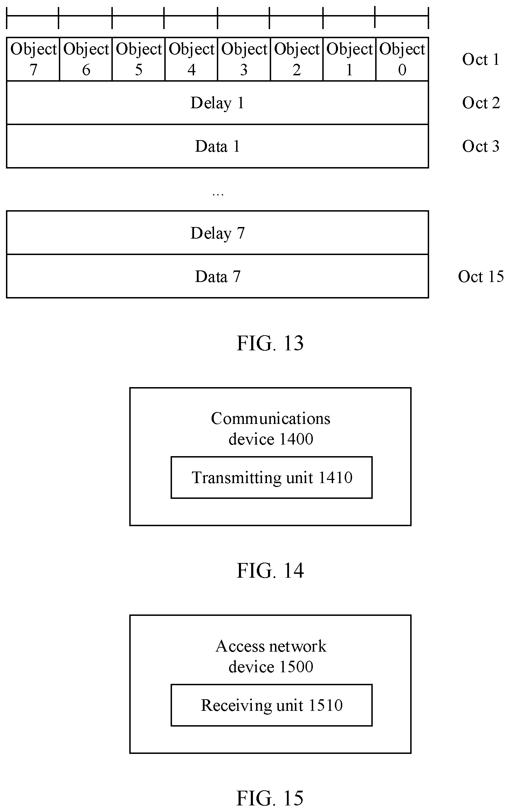

With reference to FIG. 11 to FIG. 13, the following describes implementations of the first MAC CE by using an example in which the first information is carried by the first MAC CE. Referring to FIG. 11 and FIG. 12, the first MAC CE may be used to report first information of one object. Referring to FIG. 13, the first MAC CE may be used to report first information of a plurality of objects.

Referring to FIG. 11, the first MAC CE may carry indication information of a first object and first information for the first object. The first MAC CE may occupy two bytes. Correspondingly, the indication information and delay information of the first object may be included in a first byte, where the indication information of the first object may occupy three bits, and the delay information of the first object may occupy five bits. In a second byte, data information of the first object may occupy eight bits.

Referring to FIG. 12, the first MAC CE may carry indication information of the first object and first information for the first object. The first MAC CE may occupy three bytes. In a first byte, the indication information of the first object may occupy five bits, and the other three bits may be reserved bits. In a second byte, delay information for the first object may occupy eight bits. In a third byte, the data information for the first object may occupy eight bits.

It should be noted that, for ease of differentiation, in embodiments of this application, an identifier of the first object may be a newly introduced LCID. Correspondingly, after receiving the first MAC CE, a receive end may determine, based on the LCID, that the first MAC CE is used to carry the first information. In this case, the first MAC CE may be referred to as an "enhanced MAC CE".

Referring to FIG. 13, the first MAC CE may carry indication information of a plurality of objects and first information for the plurality of objects. The first MAC CE may occupy 15 bytes. A first byte is used to carry the indication information of the plurality of objects, that is, an object 1 to an object 7. A second byte and a third byte are respectively used to carry delay information for the object 1 and data information for the object 1. A fourth byte and a fifth byte are respectively used to carry first information for the object 2, a sixth byte and a seventh byte are respectively used to carry delay information for the object 3 and data information for the object 3, an eighth byte and a ninth byte are respectively used to carry delay information for the object 4 and data information for the object 4, a tenth byte and an eleventh byte are respectively used to carry delay information for the object 5 and data information for the object 5, a twelfth byte and a thirteenth byte are respectively used to carry delay information for the object 6 and data information for the object 6, and a fourteenth byte and a fifteenth byte are respectively used to carry delay information for the object 7 and data information for the object 7.

As described above, the first information may be transmitted by using one or more of a first MAC CE, an SR, a BSR, or UAI. The following describes cases to which the foregoing several types of information are applicable. It should be noted that, examples are only used for description, determining of the foregoing transmission manner is not limited in embodiments of this application. For example, the transmission manner may be configured through protocol pre-definition or pre-configuration. In addition, for ease of description, one transmission of first information is hereinafter referred to as "first reporting".

In some implementations, if a resource used to transmit the first reporting may be used to transmit the first reporting, the first reporting may be transmitted by using the resource.

For example, if at least one first reporting is triggered, and a UL-SCH resource used for new transmission may carry a MAC CE and a sub-header of the MAC CE, the first MAC CE may be generated.

For another example, if at least one first reporting is triggered and not deleted, and a UL-SCH resource used for new transmission may carry a MAC CE and a sub-header of the MAC CE, the first MAC CE may be generated.

For another example, if at least one first reporting is triggered, and a UL-SCH resource used for new transmission may carry a MAC CE and a sub-header of the MAC CE that carries the first reporting, the first MAC CE may be generated.

For another example, if at least one first reporting is triggered and not deleted, and a UL-SCH resource used for new transmission may be used to transmit a MAC CE and a sub-header of the MAC CE, the first MAC CE may be generated.

For another example, if at least one first reporting is triggered, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered and not deleted, and a UL-SCH resource used for new transmission may carry an enhanced first MAC CE and a sub-header of the enhanced first MAC CE, the first MAC CE may be generated. Optionally, a periodic timer and/or a retransmission timer of the first reporting may be started or restarted.

For another example, if at least one first reporting is triggered, and a UL-SCH resource used for new transmission cannot carry a MAC CE and a sub-header of the MAC CE, or cannot carry a resource of an object corresponding to the first reporting, an SR that carries the first reporting may be generated.

For another example, if at least one first reporting is triggered and not deleted, and a UL-SCH resource used for new transmission cannot carry a first MAC CE and a sub-header of the first MAC CE, an SR of the first reporting may be generated.

For another example, if at least one first reporting is triggered and not deleted, and a UL-SCH resource used for new transmission is a resource that cannot carry an object of the first reporting, an SR of the first reporting may be generated.

For another example, if at least one first reporting is triggered, and a UL-SCH resource used for new transmission cannot carry a MAC CE and a sub-header of the MAC CE, UAI of the first reporting may be generated.

For another example, if at least one first reporting is triggered, and a UL-SCH resource used for new transmission is a resource that cannot carry an object corresponding to the first reporting, UAI of the first reporting may be generated.

For another example, if at least one first reporting is triggered and not deleted, and a UL-SCH resource used for new transmission cannot carry a MAC CE and a sub-header of the MAC CE, UAI of the first reporting may be generated.

For another example, if at least one first reporting is triggered and not deleted, and a UL-SCH resource used for new transmission is a resource that cannot carry a granularity corresponding to the first reporting, UAI of the first reporting may be generated.

For another example, if at least one first reporting is triggered, a terminal device may report UAI.

For another example, if the first reporting is triggered, an SR corresponding to the first reporting is triggered. Optionally, an SR resource or a configuration used to trigger the SR may be related to one or more of first information, a data priority, or data importance. Optionally, different SRs correspond to different SR configurations (configuration), such as different SR indexes (Scheduling request Id), different SR resource identifiers (scheduling request resource Id), and different PUCCH resource locations. Optionally, each SR may include content of one or more first objects.

In some implementations, in a case of a resource conflict, the SR may be preferentially transmitted, or a terminal device may consider that the SR has a high priority.

It should be noted that in embodiments of this application, one or more first MAC CEs may be carried in a MAC PDU. The first MAC CE may be the newly introduced MAC CE (for example, corresponding to a new LCID) described above. Certainly, the first MAC CE may alternatively be the BSR MAC CE described above. This is not limited in embodiments of this application.

In some scenarios, to avoid confusion, one MAC PDU cannot carry both a first MAC CE and a BSR MAC CE.

In some implementations, a priority of a BSR MAC CE may be the same as that of a first MAC CE. Certainly, in embodiments of this application, the priority of the BSR MAC CE may alternatively be different from that of the first MAC CE. For example, the priority of the first MAC CE may be higher than that of an enhanced BSR (Extended BSR). The BSR MAC CE is an existing MAC CE, or may be an enhanced BSR MAC CE.

In embodiments of this application, a PDU set may be understood as data included in the PDU set or a data packet included in the PDU set. Correspondingly, a PDU may be understood as data included in the PDU or a data packet included in the PDU.

As described above, with wide application of communications systems, a CG service is introduced. However, currently CG data is transmitted based on a CG timer. That is, when the CG data starts to be transmitted, a terminal device enables the CG data timer. In a timing period of the CG data timer, a resource used to transmit the CG data is unavailable. However, this data transmission manner based on the CG data timer results in relatively low utilization of the resource used to transmit the CG data. For example, the CG data timer is set to 10s. When the terminal device starts to transmit the CG data, the CG data timer is started. In this case, even if the CG data is successfully transmitted in the first 5s, or is successfully transmitted in one transmission, the resource used to transmit the CG data cannot be used to transmit other data because the CG data timer is still in the timing period.

Therefore, to improve utilization of the resource used to transmit the CG data, embodiments of this application further provide a wireless communication method.

In some implementations, in a case of CG data transmission (or in a case in which the CG data is transmitted), the terminal device may not enable the CG data timer (CGT and/or CGRT).

In some implementations, in a case of CG data transmission (or in a case in which the CG data is transmitted), the terminal device does not expect the CG data transmission or retransmission scheduling of a MAC PDU corresponding to the CG data transmission.

In some implementations, in a case of CG data transmission (or in a case in which the CG data is transmitted), the terminal device considers that the CG data or a MAC PDU corresponding to the CG data transmission is successfully transmitted.

In some implementations, in a case of CG data transmission (or in a case in which the CG data is transmitted), the terminal device flushes a buffer (flush buffer) when the terminal device completes the CG data transmission or transmission of a MAC PDU corresponding to the CG data transmission.

The CG data transmission may include transmission of all CG data of the terminal device, all CG data of a specific MAC entity of the terminal device, specific CG data of a specific MAC entity of the terminal device, or specific CG data.

The CG data may include CG data with a specific CG data index, CG data that carries a specific identifier, or CG data on which a network device instructs to execute an operation. The process of instructing, by the network device, to execute the specific operation may include that: the network device instructs to execute the operation on CG data with a CG data index of M. Alternatively, the process of instructing, by the network device, to execute the specific operation may include that: the network device instructs to execute the operation on CG data with a specific identifier. This is not limited in embodiments of this application.

In embodiments of this application, a behavior of the terminal device may be pre-defined, or may be indicated by the network device. For example, the network device may enable the terminal device to execute the operation on the CG data. For another example, the network device may disable the terminal device to execute the operation on the CG data.

In some implementations, the behavior may be targeted at a specific MCS corresponding to the CG data, or the behavior may be targeted at another physical layer transmission parameter.

In some implementations, if the CG data transmission corresponds to a first service, in a case of CG data transmission or in a case in which the CG data is transmitted, the terminal device may not enable the CG data timer (CG data T and/or CG data RT), or the terminal device does not expect the CG data transmission or retransmission scheduling of a MAC PDU corresponding to the CG data transmission, or the terminal device considers that the CG data or a MAC PDU corresponding to the CG data transmission is successfully transmitted, or the terminal device flushes a buffer when the terminal device completes the CG data transmission or transmission of a MAC PDU corresponding to the CG data transmission.

In some implementations, the behavior of the terminal device corresponds to a first service. The first service may be one or more of a first LCH, a first RLC, or a first RB.

In some implementations, the first service, the first RLC, the first LCH, and the first RB may correspond to a first identifier. The first identifier may be carried in one or more of RRC information, an LCH configuration, an RLC configuration, or an RB configuration.

In some other implementations, when the first identifier exists or is a specific value, the terminal device may execute an operation.

To facilitate understanding of this application, the following describes the method according to embodiments of this application in another way of description with reference to Embodiments 4 to 8. It should be noted that, in embodiments of this application, various related embodiments may be used separately or in combination. This is not limited in embodiments of this application.

Embodiment 4 is described by using an example in which the first information includes service-related information.

In some implementations, the method may include step 1: an access network device (for example, an AS or a base station) acquires first information, where the first information includes service-related information.

In some implementations, the service-related information includes at least one of the following:
a) information that comes from a UE and/or a core network in the first information.
b) service characteristic related information. In some implementations, the service characteristic related information may include at least one of the following:
   i. A granularity of the service characteristic related information is one or more of the following: a service, a QoS flow, burst data, or a PDU set.
   ii. The service characteristic related information is transmitted by using TSCAI, or is transmitted to a base station together with TSCAI, or is transmitted to a base station together with a QoS parameter.
   iii. The service characteristic related information includes information indicating that the service is a UL service and/or a DL service.
   iv. The service characteristic related information includes one or more of the following: a period, an arrival time (including an arrival start time and/or an arrival end time), a packet size, or a time jitter.
      For example, the period may include a burst data period. The arrival time may include, for example, a time at which a first piece of burst data arrives. The arrival time may alternatively include, for example, a time at which a first packet of burst data arrives. The arrival time may include, for example, a time at which a last packet of burst data arrives. The arrival time may include, for example, a time at which a first packet of a first piece of burst data arrives. The arrival time may include, for example, a time at which a last packet of a first piece of burst data arrives. The arrival time may include, for example, a time at which a packet of burst data arrives. The packet size may include, for example, a packet size of a first piece of burst data. The jitter time may include, for example, jitter time information of burst data.
   v. The service characteristic related information may be transmitted by a UE to a base station, or a base station requests a UE to report the service characteristic related information to the base station.
      Optionally, the service characteristic may be provided by a core network (for example, an SMF) for the base station in response to requesting of the base station, or may be directly provided to the base station by the core network (that is, without requesting).
   vi. The service characteristic related information is periodic or semi-static.
c) real-time or dynamic information of the service. In some implementations, the real-time or dynamic information of the service may include at least one of the following:
   i. A granularity of the real-time or dynamic information of the service is at least one of an LCH, an LCG, burst data, or a PDU set.

Optionally, the LCH is one or more of the following: any LCH, a specific LCH, an LCH whose priority is lower than that of another LCH that has to-be-transmitted data, an LCH whose priority is not the highest, or an LCH whose priority is not the highest and that has to-be-transmitted data.

Optionally, the LCG is one or more of the following: any LCG, a specific LCG, an LCG whose priority is lower than that of another LCG that has to-be-transmitted data, an LCG whose priority is not the highest, or an LCG whose priority is not the highest and that has to-be-transmitted data.

ii. The information is reported by a UE to a base station.

iii. The real-time or dynamic information of the service is reported to a base station by using UAI or a MAC CE.

iv. The real-time or dynamic information of the service is reported to a base station together with a BSR MAC CE at the same time.

v. The real-time or dynamic information of the service includes UL-related information.

vi. The real-time or dynamic information of the service includes at least one of the following: a delay, a data volume, or a data volume change.

In some implementations, the delay includes at least one of the following: a total packet transmission delay, a remaining delay, a waiting delay in a buffer, a time of arriving at a PDCP layer or an AS layer, a waiting transmission time starting from arriving at a PDCP layer or an AS layer, a total tolerable transmission delay, a maximum delay value of a corresponding granularity, a minimum delay value of a corresponding granularity, or an average delay value of a corresponding granularity.

For example, the total packet transmission delay may include statistics on an end-to-end transmission delay. For another example, the total packet transmission delay may include a time period from a time instant when a packet is transmitted to a time instant when ACK for the packet transmission is fed back. For another example, the total packet transmission delay may include a time period during which a packet is successfully received.

In some implementations, the corresponding granularity may include one or more of burst data, a UE, an LCH, or an LCG.

In some implementations, the data volume at least includes one of the following:
A volume of to-be-transmitted data. For example, the volume of the to-be-transmitted data may include a volume of to-be-transmitted data of at least one LCH. For example, the volume of the to-be-transmitted data may include a volume of to-be-transmitted data corresponding to burst data of at least one LCH. For example, the volume of the to-be-transmitted data may include a volume of to-be-transmitted data corresponding to a PDU set of at least one LCH. For example, the volume of the to-be-transmitted data may include a volume of to-be-transmitted data of at least one LCG. For example, the volume of the to-be-transmitted data may include a volume of to-be-transmitted data corresponding to burst data of at least one LCG. For example, the volume of the to-be-transmitted data may include a volume of to-be-transmitted data corresponding to a PDU set of at least one LCG. For example, the volume of the to-be-transmitted data may include a volume of to-be-transmitted data of each LCH of at least one LCG. For example, the volume of the to-be-transmitted data may include a volume of to-be-transmitted data corresponding to burst data of each LCH of at least one LCG. For example, the volume of the to-be-transmitted data may include a volume of to-be-transmitted data corresponding to a PDU set of each LCH of at least one LCG. For example, the volume of the to-be-transmitted data may include a volume of to-be-transmitted data of at least one piece of burst data (optionally, the burst data is in a UE, an LCH, or an LCG). For example, the volume of the to-be-transmitted data may include a volume of to-be-transmitted data of at least one PDU set (optionally, the burst data is in a UE, an LCH, or an LCG). For example, the volume of the to-be-transmitted data may include a maximum value of a volume of to-be-transmitted data of at least one piece of burst data (optionally, the burst data is in a UE, an LCH, or an LCG). For example, the volume of the to-be-transmitted data may include an average value of a volume of to-be-transmitted data of at least one piece of burst data (optionally, the burst data is in a UE, an LCH, or an LCG). For example, the volume of the to-be-transmitted data may include a minimum value of a volume of to-be-transmitted data of at least one piece of burst data (optionally, the burst data is in a UE, an LCH, or an LCG). For example, the volume of the to-be-transmitted data may include a volume of to-be-transmitted data of at least one PDU set (optionally, the burst data is in a UE, an LCH, an LCG, or burst data). For example, the volume of the to-be-transmitted data may include a maximum value of a volume of to-be-transmitted data of at least one PDU set (optionally, the burst data is in a UE, an LCH, an LCG, or burst data). For example, the volume of the to-be-transmitted data may include an average value of a volume of to-be-transmitted data of at least one PDU set (optionally, the burst data is in a UE, an LCH, an LCG, or burst data). For example, the volume of the to-be-transmitted data may include a minimum value of a volume of to-be-transmitted data of at least one PDU set (optionally, the burst data is in a UE, an LCH, an LCG, or burst data).

A data volume change. In some implementations, the data volume change may include at least one of the following:
a change trend, where the change trend may include, for example, at least one of becoming larger, becoming smaller, being greater than a threshold, or being less than a threshold; for another example, the change trend may include a change trend relative to a data volume for one or more of a threshold, a baseline, or a data volume reported last time;
a change characteristic, where the change characteristic may include, for example, one of a change pattern, a change period, a change start time, or a change end time; or
a data volume change value, where the data volume change value may include, for example, a value that becomes larger, a value that becomes smaller, or a change value compared with a threshold, a baseline, or a data volume reported last time.

In some implementations, the first reporting may be triggered under a first condition. The first condition includes at least one of the following:
1) the first information is not previously reported;
2) the first information changes compared with a threshold, a baseline, or information reported last time;
3) a reporting period arrives; or
4) a timer expires. The timer may refer to, for example, a timer that is enabled for a last time of reporting or each time of reporting. Correspondingly, when the timer expires, new first information may be reported.

Step 2: The access network device executes a related behavior according to the acquired first information. The related behavior may include at least one of executing scheduling, allocating a resource, or configuring a parameter.

In embodiments of this application, a UE reports first information, which is conductive to executing scheduling or configuration by a network, thereby improving a system capacity, meeting a service requirement of a service (for example, an XR service), and preventing a waste of resources.

Embodiment 5 is described by using an example in which the first information includes the delay information.

In some implementations, the method according to embodiments of this application may include step 1: a UE triggers first reporting.
a) In some implementations, the first reporting may be triggered based on a first condition. The first condition may be targeted at a MAC entity (for example, any MAC entity or a MAC entity of a specific UE). Alternatively, the first condition may be targeted at a UE, for example, a UE that has a specific capability, a UE that carries a specific service, or any UE. The specific service may include one or more of the following: an XR service, an audio service, or a video service.
b) In some implementations, the first reporting may be triggered by a UE or a MAC entity.
c) In some implementations, the first reporting may be targeted at a first object, and/or may carry an identifier of a reported first object.
   i. The first object is one of the following: an LCH, an LCH pair, an LCG, a DRB, a QoS flow, a PDU session, a PDU set, a PDU, or burst data.

Optionally, the LCH is one or more of the following: any LCH, a specific LCH, an LCH whose priority is lower than that of another LCH that has to-be-transmitted data, an LCH whose priority is not the highest, or an LCH whose priority is not the highest and that has to-be-transmitted data.

Optionally, the LCG is one or more of the following: any LCG, a specific LCG, an LCG whose priority is lower than that of another LCG that has to-be-transmitted data, an LCG whose priority is not the highest, or an LCG whose priority is not the highest and that has to-be-transmitted data.

ii. In some implementations, the identifier of the first object may be an ID and/or an index, or the like.

d) In some implementations, the first reporting carries delay information. The delay information may include at least one of the following:
i. a total packet transmission delay; a remaining delay; a waiting delay in a buffer; a time of arriving at a PDCP layer or an AS layer; a waiting transmission time starting from arriving at a PDCP layer or an AS layer; a total tolerable transmission delay; a maximum delay value of a corresponding granularity; a minimum delay value of a corresponding granularity; or an average delay value of a corresponding granularity.

For example, the total packet transmission delay may include statistics on an end-to-end transmission delay. For example, the total packet transmission delay may include a time period from a time instant when a packet is transmitted to a time instant when ACK for the packet transmission is fed back. For example, the total packet transmission delay may include a time during which a packet is successfully received.

The granularity may include one or more of an LCH, an LCG, burst data, or a PDU set.

ii. In some implementations, the first reporting may be based on an indication of a network device, and correspondingly, the UE determines whether to determine and/or report the delay information.

In some implementations, the indication information may be targeted at a granularity. In some other implementations, in response to the indication information, the UE determines the related delay information and/or reports the delay information.

For example, the remaining delay is a first duration maintained by the UE or a remaining duration of a first timer. Alternatively, the remaining delay is equal to a PSDB minus one or more of a packet waiting duration, a packet arrival duration, or a packet generation duration. Alternatively, the remaining delay is equal to a PDB minus one or more of a packet waiting duration, a packet arrival duration, or a packet generation duration.

Optionally, the first duration or the first timer is maintained by RLC, MAC, or PDCP. Optionally, a start time of the first duration or the first timer is a waiting delay of a packet in a buffer, or a time of arriving at a PDCP layer or an AS layer. Optionally, the first duration or the first timer corresponds to a PDCP discard timer.

For example, the waiting delay in the buffer may be a duration in a PDCP buffer and/or an RLC buffer. Optionally, the duration starts from a time instant at which a packet arrives at the buffer.

For example, the total tolerable transmission delay may be the same or related to a PSDB and/or a PDB or the first duration.

Optionally, the packet is burst data, a PDU set, a specific packet in burst data (for example, a first packet, a last packet, each packet, or any packet), a specific packet in a PDU set (for example, a first packet, a last packet, each packet, or any packet).

Optionally, when one packet or any packet meets the delay reporting condition, delay information may also be reported for another packet.

iii. The delay is one of a delay value, a delay level, a delay index, an identifier indicating a high delay, an identifier indicating a low delay, an identifier indicating that a delay is greater than a threshold, or an identifier indicating that a delay is less than a threshold.

iv. In a case in which the delay is indicated by the delay level or the delay index, the delay level or the delay index may be acquired by using a delay table. Optionally, the delay table may be pre-defined, or may be dynamically indicated by a network. Optionally, the delay table may correspond to the delay level, and the delay index may occupy 5 bits, 8 bits, 16 bits, or another quantity of bits. For a specific correspondence, one may refer to Table 1.

v. The first reporting may be carried by a first MAC CE or a first SR. For example, the first SR may be directly triggered, or the first SR may be triggered when the first MAC CE is triggered but there is no proper PUSCH to carry the first MAC CE or there is no proper LCH or granularity corresponding to the first MAC CE.

Optionally, the first reporting corresponds to an enhanced or new LCID. In embodiments of this application, for details on a format of a MAC CE, one may refer to related descriptions in Embodiment 1.

Optionally, a network configures at least one SR for the first reporting. Optionally, the at least one SR corresponds to at least one SR resource or at least one SR resource identifier. Optionally, the at least one SR corresponds to at least one PUCCH transmission resource or at least one PUSCH resource index.

e) A network device configures whether the UE may enable or trigger the first reporting, or the network configures a related configuration of the first reporting. For example, the related configuration may include one or more of a corresponding timer, a first condition for triggering reporting, or a threshold for triggering reporting.
i. Optionally, the network device configures the related configuration by using one of RRC, DCI, or a downlink MAC CE.

f) A dedicated SR resource or a PUCCH resource of a dedicated SR exists, or a dedicated SR resource or a PUCCH resource of a dedicated SR is available.
i. Optionally, the dedicated SR resource or the PUCCH resource of the dedicated SR corresponds to one of a specific LCH, a specific DRB, a specific QoS flow, a specific PDU session, a specific PDU set, a specific PDU, or specific burst data. Alternatively, the dedicated SR resource or the PUCCH resource of the dedicated SR is related to a delay, a remaining delay, and a data volume.

g) In some implementations, the first reporting is triggered in a case in which at least one of the following first conditions is met:
i. A reporting period arrives, or a periodic timer of the first reporting expires.
ii. A configuration or an indication of the network for enabling the first reporting is received.
iii. Data at the granularity exists or arrives. For example, data of a PDU set arrives.
iv. Data at the specific granularity exists or arrives. For example, burst data or a DU set with a high delay requirement exists or arrives. For example, burst data or a PDU set whose delay is greater than a threshold exists or arrives. For example, burst data, a PDU set with an important identifier, or burst data with a high delay requirement exists or arrives. For example, a PDU set with a preferential identifier or burst data exists or arrives. For example, a PDU set with a dependent identifier or burst data exists or arrives. For example, an I frame exists or arrives at the UE.
v. Data of a specific LCH arrives, UL data of a specific LCH is available, or a service or data with a specific characteristic arrives (for example, a service with a specific period or a specific data rate arrives). For example, data of an LCH with a specific identifier, data of an LCH with a specific priority, or data of an LCH that carries a specific service, a specific session, or a specific QoS flow arrives.
vi. Specific data exists or arrives. Optionally, burst data or at least a first PDU in a PDU set arrives, or at least a last PDU arrives; burst data or a specific PDU in a PDU set arrives (at a specific location and with a specific number); or new burst data or a new PDU set arrives.
   Optionally, for at least one of the foregoing, the PDU set may also be understood as data or a data packet corresponding to the PDU set; and the PDU may also be understood as data or a data packet corresponding to the PDU.
vii. At least one of the following conditions is met:
   a delay is less than a threshold;
   a time is about to exceed a PDB or a PSDB;
   a PSDB or a PDB is less than a threshold;
   a remaining transmission delay is less than a threshold;
   a time during which data is available in a buffer is greater than or equal to a threshold;
   corresponding data that is to be transmitted or not transmitted exists;
   a volume of data at a corresponding granularity is greater than a threshold; for example, the volume of the data is targeted at a first object, such as a PDU set or burst data;
   information changes relative to previous reporting or an information change exceeds a threshold;
   MAC packet loss, PDCP packet loss, or RLC packet loss occurs, or a peer end indicates MAC packet loss, PDCP packet loss, or RLC packet loss;
   BSR reporting is triggered, for example, one of a periodic BSR, a conventional BSR, or a padding BSR is triggered;
   a BSR MAC CE is generated, or a PUSCH may carry a BSR MAC CE;
   an enhanced BSR is triggered, where the enhanced BSR is used to report a volume of data at the granularity; or
   an enhanced BSR MAC CE is generated, where the enhanced BSR is used to report data at the granularity.

h) The UE generates one or more of a first MAC CE, an SR, or UAI.
i. For example, if at least one first reporting is triggered and not deleted, and a UL-SCH resource used for new transmission may carry a MAC CE and a subheader of the MAC CE, a first reporting MAC CE may be generated.
ii. For example, if at least one first reporting is triggered and not deleted, and a UL-SCH resource used for new transmission may carry an enhanced first reporting MAC CE and a sub-header of the enhanced first reporting MAC CE, a first reporting MAC CE may be generated. Optionally, a periodic timer and/or a retransmission timer of the first reporting may be started or restarted.
iii. For example, if at least one first reporting is triggered and not deleted, and a UL-SCH resource used for new transmission cannot carry a MAC CE and a sub-header of the MAC CE, or cannot carry a resource at a granularity corresponding to the first reporting, an SR of the first reporting may be generated.
iv. For example, if at least one first reporting is triggered and not deleted, and a UL-SCH resource used for new transmission cannot carry a MAC CE and a sub-header of the MAC CE, or cannot carry a resource at a granularity corresponding to the first reporting, UAI of the first reporting may be generated.
v. For example, if at least one first reporting is triggered, the UE reports UAI.
vi. For example, if the first reporting is triggered, an SR corresponding to the first reporting is triggered. Optionally, an SR resource or a configuration used to trigger the SR may be related to one or more of delay information, a data priority, or data importance. Optionally, different SRs correspond to different SR configurations, such as different SR IDs, different SR resource IDs, and different PUCCH resource locations. Optionally, each SR may include content of one or more first objects. Optionally, in a case of a resource conflict, the SR may be preferentially transmitted or it is considered that the SR has a high priority.
   i. For example, one MAC PDU may carry one first reporting MAC CE and one BSR MAC CE, where the MAC CE may be an existing or enhanced MAC CE.
   ii. For example, one MAC PDU cannot carry both a first reporting MAC CE and a BSR MAC CE.
   iii. For example, a BSR MAC CE and/or a first reporting MAC CE have a same priority, where the MAC CE may be an existing or enhanced MAC CE.
   iv. For example, a priority of a first reporting MAC CE is higher than or equal to that of an enhanced BSR.

Step 2: A network device receives first reporting information. Optionally, the network device executes scheduling or parameter configuration based on the first reporting information.

In embodiments of this application, an embodiment in which first reporting includes delay information may be separately used, or may be used in combination with another embodiment.

Embodiment 6 is described by using an example in which first reporting includes the delay information and the data information.

In some implementations, the method according to embodiments of this application may include step 1: a UE triggers first reporting.
a) In some implementations, the first reporting may be triggered by a first condition, where the first condition may be, for example, targeted at a MAC entity (for example, any MAC entity or a MAC entity of a specific UE). The first condition may be, for example, targeted at a UE, where the UE may be a UE that has a specific capability, a UE that carries a specific service, or any UE. The specific service may include an XR service, an audio service, or a video service.
b) Optionally, the first reporting is triggered by a UE or a MAC entity.
c) In some implementations, the first reporting may be targeted at a first object, and/or may carry an identifier of a reported first object.
   i. In some implementations, the first object is one of the following: an LCH, an LCH pair, an LCG, a DRB, a QoS flow, a PDU session, a PDU set, a PDU, or burst data.

Optionally, the LCH is one or more of the following: any LCH, a specific LCH, an LCH whose priority is lower than that of another LCH that has to-be-transmitted data, an LCH whose priority is not the highest, or an LCH whose priority is not the highest and that has to-be-transmitted data.

Optionally, the LCG is one or more of the following: any LCG, a specific LCG, an LCG whose priority is lower than that of another LCG that has to-be-transmitted data, an LCG whose priority is not the highest, or an LCG whose priority is not the highest and that has to-be-transmitted data.

ii. The identifier of the first object may be an ID and/or an index, or the like.

d) The first reporting carries delay information and data information. Specifically, the delay information and the data information may include at least one of the following:
i. The data information includes at least one of the following: information about a data volume or a data volume change.
ii. The data volume includes at least one of the following: a volume of to-be-transmitted data, for example, a volume of to-be-transmitted data of at least one LCH, a volume of to-be-transmitted data corresponding to burst data of at least one LCH, a volume of to-be-transmitted data corresponding to a PDU set of at least one LCH, a volume of to-be-transmitted data of at least one LCG, a volume of to-be-transmitted data corresponding to burst data of at least one LCG, a volume of to-be-transmitted data corresponding to a PDU set of at least one LCG, a volume of to-be-transmitted data corresponding to each LCH of at least one LCG, a volume of to-be-transmitted data corresponding to burst data of each LCH of at least one LCG, a volume of to-be-transmitted data corresponding to a PDU set of each LCH of at least one LCG, a volume of to-be-transmitted data of at least one piece of burst data, a volume of to-be-transmitted data of at least one PDU set, a maximum value of a volume of to-be-transmitted data of at least one piece of burst data, an average value of a volume of to-be-transmitted data of at least one piece of burst data, a minimum value of a volume of to-be-transmitted data of at least one piece of burst data, a volume of to-be-transmitted data of at least one PDU set, a maximum value of a volume of to-be-transmitted data of at least one PDU set, an average value of a volume of to-be-transmitted data of at least one PDU set, or a minimum value of a volume of to-be-transmitted data of at least one PDU set.
   Optionally, the granularity may include one or more of burst data, a UE, an LCH, or an LCG.
iii. The data volume change may include at least one of the following: a change trend, where the change trend may include, for example, at least one of becoming larger, becoming smaller, being greater than a threshold, or being less than a threshold. Alternatively, the change trend may be, for example, one or more of a change trend for a threshold, a change trend for a baseline, or a change trend for a data volume reported last time. A change characteristic is, for example, one or more of a change pattern (pattern), a change period, a change start time, or a change end time. A data volume change value is, for example, a value that becomes larger, a value that becomes smaller, a change value compared with a threshold, a change value compared with a baseline, or a change value compared with a data volume reported last time.
iv. The delay includes at least one of the following: a total packet transmission delay, for example, statistics on an end-to-end transmission delay. For example, a time period from a time instant when a packet is transmitted to a time instant when ACK for the packet transmission is fed back, for example, a time during which a packet is successfully received; a remaining delay, a waiting delay in a buffer, a time of arriving at a PDCP layer or an AS layer, a waiting transmission time starting from arriving at a PDCP layer or an AS layer, a total tolerable transmission delay, a maximum delay value of a corresponding granularity, a minimum delay value of a corresponding granularity, or an average delay value of a corresponding granularity. The granularity may include one or more of a UE, an LCH, an LCG, or burst data.
v. The delay is one of a delay value, a delay level, a delay index, an identifier indicating a high delay, an identifier indicating a low delay, an identifier indicating that a delay is greater than a threshold, or an identifier indicating that a delay is less than a threshold.
vi. In a case in which the delay is indicated by the delay level or the delay index, the delay level or the delay index may be acquired by using a delay table. Optionally, the delay table may be pre-defined, or may be dynamically indicated by a network. Optionally, the delay table may correspond to the delay level, and the delay index may occupy 5 bits, 8 bits, 16 bits, or another quantity of bits.
vii. The data information is one of a data value, a data level, a data index, a high data identifier, a low data identifier, an identifier indicating that data is greater than a threshold, an identifier indicating that data is less than a threshold, an identifier indicating a data change being greater than a threshold, or an identifier indicating a data change being less than a threshold.
viii. In a case in which the data information is indicated by a data level or a data index, the data level or the data index may be acquired by using a data table. Optionally, the data table may be pre-defined, or may be dynamically indicated by a network. Optionally, the data table may correspond to the data level, and the data index may occupy 5 bits, 8 bits, 16 bits, or another quantity of bits. Optionally, when the data information is the information about the data volume, the table may be an existing table corresponding to a BS, or may be a new table.
ix. Optionally, in a case in which the first reporting is triggered or used, for example, data information is reported, a new table is used; otherwise, the existing table is used to report the data information. Alternatively, in a case in which the first reporting is triggered or used, if data information is greater than or equal to a threshold, and the data information is necessary to be reported, the new table is used; otherwise, the existing table is used to report the data information. Alternatively, if the UE has a capability of reporting the first reporting or data at a corresponding granularity exists, and data information is necessary to be reported, the new table is used; otherwise, otherwise, the existing table is used to report the data information. Alternatively, if the UE has a capability of reporting the first reporting or data at a corresponding granularity exists, for example, data information is greater than or equal to a threshold, and the data information is necessary to be reported, the new table is used; otherwise, the existing table is used to report the data information. Alternatively, the network indicates whether to use the new data table or the existing data table, or which table is to be used. Optionally, the indication may be targeted at one of a UE, MAC, an LCH, an LCG, burst data, a PDU set, or the like.
x. Optionally, a quantity of bits occupied by a delay table may be the same as or different from a quantity of bits occupied by a data information table. Optionally, a quantity of bits occupied by the information about the data volume corresponding to the data information may be different from or the same as a quantity of bits occupied by the information about the data volume change corresponding to the data information. For details on the delay table, one may refer to Table 1. For details on a data volume table, one may refer to Table 2.
xi. The first reporting may be carried by a first MAC CE or a first SR. For example, the first SR may be directly triggered, or the first SR may be triggered when the first MAC CE is triggered but there is no proper PUSCH to carry the first MAC CE or there is no proper LCH or granularity corresponding to the first MAC CE.

Optionally, the first reporting corresponds to an enhanced or new LCID. In embodiments of this application, for details on a format of a MAC CE, one may refer to related descriptions in Embodiment 3. For brevity, details are not described herein again.

Optionally, a network device may configure at least one SR for the first reporting. Optionally, the at least one SR corresponds to at least one SR resource or at least one SR resource identifier. Optionally, the at least one SR corresponds to at least one PUCCH transmission resource or at least one PUSCH resource index.

e) A network device may configure whether the UE may enable or trigger the first reporting, or the network configures a related configuration of the first reporting. For example, the related configuration may include one or more of configuring a corresponding timer, a condition for triggering reporting, or a threshold for triggering reporting.
i. Optionally, the related configuration may be configured by using one of RRC, DCI, or a downlink MAC CE.

f) A dedicated SR resource or a PUCCH resource of a dedicated SR exists, or a dedicated SR resource or a PUCCH resource of a dedicated SR is available.
i. Optionally, the dedicated SR resource or the PUCCH resource of the dedicated SR corresponds to one of a specific LCH, a specific DRB, a specific QoS flow, a specific PDU session, a specific PDU set, a specific PDU, or specific burst data. Alternatively, the dedicated SR resource or the PUCCH resource of the dedicated SR may be related to a delay, a remaining delay, or a data volume.

g) In some implementations, the first reporting is triggered in a case in which at least one of the following conditions i-vii is met.
i. A reporting period arrives, or a periodic timer of the first reporting expires.
ii. A configuration or an indication of a network device for enabling the first reporting is received.
iii. Data at the granularity exists or arrives. For example, data of a PDU set arrives.
iv. Data at the specific granularity exists or arrives. For example, burst data or a PDU set with a high delay requirement exists or arrives. For example, burst data or a PDU set whose delay is greater than a threshold exists or arrives. For example, burst data, a PDU set with an important identifier, or burst data with a high delay requirement exists or arrives. For example, a PDU set with a preferential identifier or burst data exists or arrives. For example, a PDU set with a dependent identifier or burst data exists or arrives. For example, an I frame exists or arrives.
v. Data of a specific LCH arrives; or UL data of a specific LCH is available; or a service or data with a specific characteristic arrives. For example, a service with a specific period or a specific data rate arrives. For example, a service of an LCH with a specific identifier arrives, a service of an LCH with a specific priority arrives, or data of an LCH that carries a specific service, a specific PDU session, or a specific QoS flow arrives.
vi. Specific data exists or arrives. Optionally, burst data or at least a first PDU in a PDU set arrives, or at least a last PDU arrives; burst data or a specific PDU in a PDU set arrives (at a specific location and with a specific number); or new burst data or a new PDU set arrives. Optionally, for at least one of the foregoing, the PDU set may also be understood as data or a data packet corresponding to the PDU set; and the PDU may also be understood as data or a data packet corresponding to the PDU.
vii. At least one of the following conditions is met:
   a delay is less than a threshold;
   a time is about to exceed a PDB or a PSDB;
   a PSDB or a PDB is less than a threshold;
   a remaining transmission delay is less than a threshold;
   a time during which data is available in a buffer is greater than or equal to a threshold;
   data that is to be transmitted or not transmitted exists;
   a volume of data at a corresponding granularity is greater than a threshold; for example, the volume of the data is targeted at a first object, such as a PDU set or burst data;
   information changes relative to a previous time of reporting, or an information change exceeds a threshold;
   MAC packet loss, PDCP packet loss, or RLC packet loss exists, or a peer end indicates MAC packet loss, PDCP packet loss, or RLC packet loss;
   BSR reporting is triggered, for example, one of a periodic BSR, a conventional BSR, or a padding BSR is triggered;
   a BSR MAC CE is generated, or a PUSCH may carry a BSR MAC CE; or
   at least one of existing BSR triggering conditions is met.

h) The UE generates one or more of a first MAC CE, an SR, or UAI.
i. For example, if at least one first reporting is triggered and not deleted, and a UL-SCH resource used for new transmission may carry a MAC CE and a subheader of the MAC CE, a first reporting MAC CE may be generated.
ii. For example, if at least one first reporting is triggered and not deleted, and a UL-SCH resource used for new transmission may carry an enhanced first reporting MAC CE and a sub-header of the enhanced first reporting MAC CE, a first reporting MAC CE may be generated. Optionally, a periodic timer and/or a retransmission timer of the first reporting may be started or restarted.
iii. For example, if at least one first reporting is triggered and not deleted, and a UL-SCH resource used for new transmission cannot carry a MAC CE and a sub-header of the MAC CE, or cannot carry a resource at a granularity corresponding to the first reporting, an SR of the first reporting may be generated.
iv. For example, if at least one first reporting is triggered and not deleted, and a UL-SCH resource used for new transmission cannot carry a MAC CE and a sub-header of the MAC CE, or cannot carry a resource at a granularity corresponding to the first reporting, UAI of the first reporting may be generated.
v. For example, if at least one first reporting is triggered, the UE reports UAI (UE auxiliary information).
vi. For example, if the first reporting is triggered, an SR corresponding to the first reporting is triggered. Optionally, an SR resource or a configuration used to trigger the SR may be related to delay information, a data priority, and importance. Optionally, different SRs correspond to different SR configurations, such as different SR IDs, different SR resource IDs, and different PUCCH resource locations. Optionally, each SR may include content of one or more first objects. Optionally, in a case of a resource conflict, the SR is preferentially transmitted or it is considered that the SR has a high priority.

I) In some implementations, the first reporting may be configured based on the following descriptions.
i. For example, one MAC PDU may carry one first reporting MAC CE and one BSR MAC CE, where the BSR MAC CE may be an existing or enhanced BSR MAC CE.
ii. For example, one MAC PDU cannot carry both a first reporting MAC CE and a BSR MAC CE.
iii. For example, a BSR MAC CE and/or a first reporting MAC CE have a same priority, or a priority of the first reporting MAC CE is higher than that of the BSR MAC CE, where the BSR MAC CE may be an existing or enhanced BSR MAC CE.
iv. For example, a priority of a first reporting MAC CE is higher than or equal to that of an enhanced BSR.

Step 2: A network device receives first reporting information. Optionally, the network device may execute scheduling or parameter configuration based on the first reporting information.

In embodiments of this application, an embodiment in which first reporting includes delay information and data information may be separately used, or may be used in combination with another embodiment.

Embodiment 7 is described by using an example in which the first reporting includes the data information.

In some implementations, the method according to embodiments of this application may include step 1: a UE triggers first reporting.
a) In some implementations, the first reporting may be triggered based on a first condition. For example, the first condition may be targeted at a MAC entity, where the MAC entity may be any MAC entity or a MAC entity of a specific UE. For example, the first condition may be targeted at a UE, where the UE may be a UE that has a specific capability, a UE that carries a specific service, or any UE. The specific service may include, for example, an XR service, an audio service, or a video service.
b) Optionally, the first reporting is triggered by a UE or a MAC entity.
c) In some implementations, the first reporting may be targeted at a first object, and/or may carry an identifier of a reported first object.
   i. In some implementations, the first object is one of the following: an LCH, an LCH pair, an LCG, a DRB, a QoS flow, a PDU session, a PDU set, a PDU, or burst data.

Optionally, the LCH is one or more of the following: any LCH, a specific LCH, an LCH whose priority is lower than that of another LCH that has to-be-transmitted data, an LCH whose priority is not the highest, or an LCH whose priority is not the highest and that has to-be-transmitted data.

Optionally, the LCG is one or more of the following: any LCG, a specific LCG, an LCG whose priority is lower than that of another LCG that has to-be-transmitted data, an LCG whose priority is not the highest, or an LCG whose priority is not the highest and that has to-be-transmitted data.

ii. In some implementations, the identifier of the first object may be an ID and/or an index, or the like.

d) In some implementations, the first reporting carries data information.
i. In some implementations, the data information includes at least one of the following: information about a data volume or a data volume change.
ii. In some implementations, the data volume includes at least one of the following: a volume of to-be-transmitted data, for example, the volume of the to-be-transmitted data includes a volume of to-be-transmitted data of at least one LCH. For example, the volume of the to-be-transmitted data includes a volume of to-be-transmitted data corresponding to burst data of at least one LCH. For example, the volume of the to-be-transmitted data includes a volume of to-be-transmitted data corresponding to a PDU set of at least one LCH. For example, the volume of the to-be-transmitted data includes a volume of to-be-transmitted data of at least one LCG. For example, the volume of the to-be-transmitted data includes a volume of to-be-transmitted data corresponding to burst data of at least one LCG. For example, the volume of the to-be-transmitted data includes a volume of to-be-transmitted data corresponding to a PDU set of at least one LCG. For example, the volume of the to-be-transmitted data includes a volume of to-be-transmitted data of each LCH of at least one LCG. For example, the volume of the to-be-transmitted data includes a volume of to-be-transmitted data corresponding to burst data of each LCH of at least one LCG. For example, the volume of the to-be-transmitted data includes a volume of to-be-transmitted data corresponding to a PDU set of each LCH of at least one LCG. For example, the volume of the to-be-transmitted data includes a volume of to-be-transmitted data of at least one piece of burst data. For example, the volume of the to-be-transmitted data includes a volume of to-be-transmitted data of at least one PDU set. For example, the volume of the to-be-transmitted data includes a maximum value of a volume of to-be-transmitted data of at least one piece of burst data. For example, the volume of the to-be-transmitted data includes an average value of a volume of to-be-transmitted data of at least one piece of burst data. For example, the volume of the to-be-transmitted data includes a minimum value of a volume of to-be-transmitted data of at least one piece of burst data. For example, the volume of the to-be-transmitted data includes a volume of to-be-transmitted data of at least one PDU set. For example, the volume of the to-be-transmitted data includes a maximum value of a volume of to-be-transmitted data of at least one PDU set. For example, the volume of the to-be-transmitted data includes an average value of a volume of to-be-transmitted data of at least one PDU set. For example, the volume of the to-be-transmitted data includes a minimum value of a volume of to-be-transmitted data of at least one PDU set.
   Optionally, the granularity may include one or more of burst data, a UE, an LCH, or an LCG.
iii. In some implementations, the data volume change may include at least one of the following:
   a change trend, where the change trend may include, for example, at least one of becoming larger, becoming smaller, being greater than a threshold, or being less than a threshold; for example, the change trend may include one or more of a change trend for a threshold, a change trend for a baseline, or a change trend for a data volume reported last time;
   a change characteristic, where the change trend may include, for example, one of a change pattern, a change period, a change start time, or a change end time; or
   a data volume change value, where the data volume change value may include, for example, a value that becomes larger, a value that becomes smaller, a change value compared with a threshold, a change value compared with a baseline, or a change value compared with a data volume reported last time.
iv. In some implementations, the data information is one of a data value, a data level, a data index, a high data identifier, a low data identifier, an identifier indicating that data is greater than a threshold, an identifier indicating that data is less than a threshold, an identifier indicating a data change being greater than a threshold, or an identifier indicating data change being less than a threshold.
v. In some implementations, in a case in which the data information is indicated by a data level or a data index, the data level or the data index may be acquired by using a data table. Optionally, the data table may be pre-defined, or may be dynamically indicated by a network. Optionally, the data table may correspond to the data level, and the data index may occupy five bits, eight bits, 16 bits, or another quantity of bits. Optionally, when the data information is the information about the data volume, the table may be an existing table corresponding to a BS, or may be a new table.
vi. Optionally, in a case in which the first reporting is triggered or used, for example, data information is reported, a new table is used; otherwise, the existing table is used to report the data information. Alternatively, in a case in which the first reporting is triggered or used, if data information is greater than or equal to a threshold, and the data information is necessary to be reported, the new table is used; otherwise, the existing table is used to report the data information. Alternatively, if the UE has a capability of reporting the first reporting or data at a corresponding granularity exists, and data information is necessary to be reported, the new table is used; otherwise, the existing table is used to report the data information. Alternatively, if the UE has a capability of reporting the first reporting or data at a corresponding granularity exists, for example, data information is greater than or equal to a threshold, and the data information is necessary to be reported, the new table is used; otherwise, the existing table is used to report the data information. Alternatively, the network indicates whether to use the new data table or the existing data table, or which table is to be used. Optionally, the indication may be targeted at one or more of a UE, MAC, an LCH, an LCG, burst data, or a PDU set.
vii. Optionally, a quantity of bits occupied by the information about the data volume corresponding to the data information may be different from or the same as a quantity of bits occupied by the information about the data volume change corresponding to the data information. For details on a correspondence between a data volume level and a data volume in embodiments of this application, one may refer to Table 2. For brevity, details are not described herein again.
viii. The first reporting may be carried by a first MAC CE or a first SR (the first SR may be directly triggered, or the first SR may be triggered when the first MAC CE is triggered but there is no proper PUSCH to carry the first MAC CE or there is no proper LCH or granularity corresponding to the first MAC CE).

Optionally, the first reporting corresponds to an enhanced or new LCID. For details on a MAC CE format applicable to embodiments of this application, one may refer to related descriptions in Embodiment 3.

Optionally, a network configures at least one SR for the first reporting. Optionally, the at least one SR corresponds to at least one SR resource or at least one SR resource identifier. Optionally, the at least one SR corresponds to at least one PUCCH transmission resource or at least one PUSCH resource index.

e) A network device configures whether the UE may enable or trigger the first reporting, or the network device configures a related configuration of the first reporting. For example, the related configuration may include a corresponding timer, a condition for triggering reporting, or a threshold for triggering reporting.
i. Optionally, the related configuration is configured by using one of RRC, DCI, or a downlink MAC CE.

f) A dedicated SR resource or a PUCCH resource of a dedicated SR exists, or a dedicated SR resource or a PUCCH resource of a dedicated SR is available.
i. Optionally, the dedicated SR resource or the PUCCH resource of the dedicated SR corresponds to one of a specific LCH, a specific DRB, a specific QoS flow, a specific PDU session, a specific PDU set, a specific PDU, or specific burst data. Alternatively, the dedicated SR resource or the PUCCH resource of the dedicated SR may be related to a delay, a remaining delay, and a data volume.

g) The first reporting is triggered in a case in which at least one of the following conditions is met.
i. A reporting period arrives, or a periodic timer of the first reporting expires.
ii. A configuration or an indication of a network device for enabling the first reporting is received.
iii. Data at the granularity exists or arrives. For example, data of a PDU set arrives.
iv. Data at the specific granularity exists or arrives. For example, burst data or a PDU set with a high delay requirement exists or arrives. For example, burst data or a PDU set whose delay is greater than a threshold exists or arrives. For example, burst data, a PDU set with an important identifier, or burst data with a high delay requirement exists or arrives. For example, a PDU set with a preferential identifier or burst data exists or arrives. For example, a PDU set with a dependent identifier or burst data exists or arrives. For example, an I frame exists or arrives.
v. Data of a specific LCH arrives, UL data of a specific LCH is available, or a service or data with a specific characteristic arrives (for example, a service with a specific period or a specific data rate arrives). For example, data of an LCH with a specific identifier arrives. For example, data of an LCH with a specific priority arrives. For example, data of an LCH that carries a specific service, a specific PDU session, or a specific QoS flow arrives.
vi. Specific data exists or arrives. Optionally, burst data or at least a first PDU in a PDU set arrives, or at least a last PDU arrives; burst data or a specific PDU in a PDU set arrives (at a specific location and with a specific number); or new burst data or a new PDU set arrives. Optionally, for at least one of the foregoing, the PDU set may also be understood as data or a data packet corresponding to the PDU set; and the PDU may also be understood as data or a data packet corresponding to the PDU.
vii. At least one of the following conditions is met:
   a delay is less than a threshold;
   a time is about to exceed a PDB or a PSDB;
   a PSDB or a PDB is less than a threshold;
   a remaining transmission delay is less than a threshold;
   a time during which data is available in a buffer is greater than or equal to a threshold;
   data that is to be transmitted or not transmitted exists;
   a volume of data at a corresponding granularity is greater than a threshold, where the granularity may include, for example, a PDU set or burst data;
   information changes relative to a previous time of reporting, or an information change exceeds a threshold;
   one or more of MAC packet loss, PDCP packet loss, or RLC packet loss exists, or a peer end indicates one or more of MAC packet loss, PDCP packet loss, or RLC packet loss;
   BSR reporting is triggered, for example, reporting of one of a periodic BSR, a conventional BSR, or a padding BSR is triggered;
   a BSR MAC CE is generated or a PUSCH may carry a BSR MAC CE;
   at least one of existing BSR triggering conditions is met; or
   reporting of delay information is triggered.

h) The UE generates one or more of a first MAC CE, an SR, or UAI.
i. For example, if at least one first reporting is triggered and not deleted, and a UL-SCH resource used for new transmission may carry a MAC CE and a subheader of the MAC CE, a first reporting MAC CE may be generated.
ii. For example, if at least one first reporting is triggered and not deleted, and a UL-SCH resource used for new transmission may carry an enhanced first reporting MAC CE and a sub-header of the enhanced first reporting MAC CE, a first reporting MAC CE may be generated. Optionally, a periodic timer and/or a retransmission timer of the first reporting may be started or restarted.
iii. For example, if at least one first reporting is triggered and not deleted, and a UL-SCH resource used for new transmission cannot carry a MAC CE and a sub-header of the MAC CE, or cannot carry a resource at a granularity corresponding to the first reporting, an SR of the first reporting may be generated.
iv. For example, if at least one first reporting is triggered and not deleted, and a UL-SCH resource used for new transmission cannot carry a MAC CE and a sub-header of the MAC CE, or cannot carry a resource at a granularity corresponding to the first reporting, UAI of the first reporting may be generated.
v. For example, if at least one first reporting is triggered, the UE reports UAI.
vi. For example, if the first reporting is triggered, an SR corresponding to the first reporting is triggered. Optionally, an SR resource or a configuration used to trigger the SR may be related to delay information and/or a data priority, or data importance. Optionally, different SRs correspond to different SR configurations, such as different SR IDs, different SR resource IDs, and different PUCCH resource locations. Optionally, each SR may include content of one or more first objects. Optionally, in a case of a resource conflict, the SR is preferentially transmitted or it is considered that the SR has a high priority.

i) Optionally, the first reporting may meet the following cases:
i. For example, one MAC PDU may carry one first reporting MAC CE and one BSR MAC CE, where the BSR MAC CE may be an existing BSR MAC CE or an enhanced BSR MAC CE.
ii. For example, one MAC PDU may carry one first reporting MAC CE and one MAC CE related to delay information.
iii. For example, one MAC PDU cannot carry both a first reporting MAC CE and a BSR MAC CE.
iv. For example, a priority of the MAC CE related to the delay information is the same as that of the first reporting MAC CE.
v. For example, a priority of the first reporting MAC CE is higher than that of a BSR MAC CE, where the BSR MAC CE may be an existing BSR MAC CE or an enhanced BSR MAC CE.
vi. For example, a BSR MAC CE and/or a first reporting MAC CE have a same priority, or a priority of the first reporting MAC CE is higher than that of the BSR MAC CE, where the BSR MAC CE may be an existing BSR MAC CE or an enhanced BSR MAC CE.
vii. For example, a priority of a first reporting MAC CE is higher than or equal to that of an enhanced BSR.

Step 2: A network device receives first reporting information. Optionally, the network device may execute scheduling or parameter configuration based on the first reporting information.

The foregoing describes the method embodiments of this application in detail with reference to FIG. 1 to FIG. 13. The following describes the apparatus embodiments of this application in detail with reference to FIG. 14 to FIG. 16. It should be understood that the descriptions of the method embodiments correspond to descriptions of the apparatus embodiments, and therefore, for parts that are not described in detail, one may refer to the foregoing method embodiments.

FIG. 14 is a schematic diagram of a communications device according to an embodiment of this application. The communications device 1400 shown in FIG. 14 includes a transmitting unit 1410.

The transmitting unit 1410 is configured to transmit first information to an access network device, where the first information includes information related to target data, and the communications device includes a terminal device and/or a core network device.

In some implementation methods, the first information includes second information associated with a static or semi-static feature of the target data and/or third information associated with a dynamic feature of the target data.

In some implementation methods, the first information includes one or more of the following: information about one-time transmission; information about static interaction; or information about semi-static interaction; information about dynamic interaction; or information about real-time interaction; and/or the second information in the first information includes one or more of the following: information about one-time transmission; information about static interaction; or information about semi-static interaction; and/or the third information in the first information includes one or more of the following: information about dynamic interaction; or information about real-time interaction.

In some implementation methods, the static or semi-static feature includes one or more of the following: a transmission direction of the target data; a period of the target data; a time at which the target data arrives; a size of a data packet of the target data; or information about a first delay of the target data.

In some implementation methods, if the static or semi-static feature includes the time at which the target data arrives, the second information includes one or more of the following: the time at which the target data arrives; a time at which the target data is transmitted; a time at which the target data leaves; or a time at which a jitter occurs on the target data.

In some implementation methods, the dynamic feature includes one or more of the following: information about a second delay of the target data; a period corresponding to the target data; buffer information of the target data; information about a data volume of the target data; or time information corresponding to a dynamic change of the target data.

In some implementation methods, if the dynamic feature includes the information about the second delay, the third information includes one or more of the following: information about a transmission delay corresponding to the target data; information about a remaining delay corresponding to the target data; information about a waiting delay corresponding to the target data in a transmission process; information about a PDCP layer arrival time corresponding to the target data; information about an AS layer arrival time corresponding to the target data; or information about a statistical delay of a transmission granularity corresponding to the target data.

In some implementation methods, the dynamic feature includes the information about the data volume of the target data, and the third information includes one or more of the following: information indicating the data volume of the target data; or information indicating a data volume change of the target data.

In some implementation methods, the information indicating the data volume change of the target data includes one or more of the following: information indicating a change trend of the data volume of the target data; information indicating a characteristic change of the target data; information indicating a data volume change amount of the target data; or information indicating a data volume after the data volume of the target data changes.

In some implementation methods, the first information is periodically transmitted, and/or the first information is triggered by an event, and/or the first information is triggered based on a first condition, and/or the target data meets a first threshold.

In some implementation methods, if the first information is triggered based on the first condition, the first condition includes one or more of the following: the communications device does not transmit the first information to the access network device; the first information changes; a time at which the first information is transmitted arrives; the target data arrives; the target data is to be transmitted; a feature corresponding to the target data is associated; there is first information to be transmitted; or trigger information of the first information is received.

In some implementation methods, the first information includes one or more of the following: information corresponding to one or more LCHs; information corresponding to one or more LCH groups; information corresponding to one or more LCGs; information corresponding to one or more data bursts; information corresponding to one or more QoS flows; information corresponding to one or more PDUs; information corresponding to one or more PDU sets; information corresponding to one or more DRBs; information corresponding to one or more PDU sessions; or information corresponding to a target service.

In some implementation methods, the first information is carried in time-sensitive communication assistance information TSCAI; or the first information is carried in a first message, where the first message includes TSCAI; or the first information is carried in a second message, where the second message includes a QoS parameter; or the first information is carried in a QoS flow; or the first information is transmitted together with time-sensitive communication assistance information TSCAI; or the first information is transmitted together with a QoS configuration or a QoS parameter.

In some implementation methods, the first information is carried in one or more of the following: a first MAC CE, an SR, or a BSR.

In some implementation methods, the target data includes one or more of the following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

FIG. 15 is a schematic diagram of an access network device according to an embodiment of this application. The access network device 1500 shown in FIG. 15 includes a receiving unit 1510.

The receiving unit is configured to receive first information transmitted by a communications device, where the first information includes information related to target data, and the communications device includes a terminal device and/or a core network device.

In some implementation methods, the first information includes second information associated with a static or semi-static feature of the target data and/or third information associated with a dynamic feature of the target data.

In some implementation methods, the second information includes one or more of the following: information about one-time transmission; information about static interaction; or information about semi-static interaction; and/or the third information includes one or more of the following: information about dynamic interaction; or information about real-time interaction.

In some implementation methods, the static or semi-static feature includes one or more of the following: a transmission direction of the target data; a period of the target data; a time at which the target data arrives; a size of a data packet of the target data; or information about a first delay of the target data.

In some implementation methods, if the static or semi-static feature includes the time at which the target data arrives, the second information includes one or more of the following: the time at which the target data arrives; a time at which the target data is transmitted; a time at which the target data leaves; or a time at which a jitter occurs on the target data.

In some implementation methods, the dynamic feature includes one or more of the following: information about a second delay of the target data; a period corresponding to the target data; buffer information of the target data; information about a data volume of the target data; or time information corresponding to a dynamic change of the target data.

In some implementation methods, if the dynamic feature includes the information about the second delay, the third information includes one or more of the following: information about a transmission delay corresponding to the target data; information about a remaining delay corresponding to the target data; information about a waiting delay corresponding to the target data in a transmission process; information about a PDCP layer arrival time corresponding to the target data; information about an AS layer arrival time corresponding to the target data; or information about a statistical delay of a transmission granularity corresponding to the target data.

In some implementation methods, the dynamic feature includes the information about the data volume of the target data, and the third information includes one or more of the following: information indicating the data volume of the target data; or information indicating a data volume change of the target data.

In some implementation methods, the information indicating the data volume change of the target data includes one or more of the following: information indicating a change trend of the data volume of the target data; information indicating a characteristic change of the target data; information indicating a data volume change amount of the target data; or information indicating a data volume after the data volume of the target data changes.

In some implementation methods, the first information is periodically transmitted, and/or the first information is triggered by an event, and/or the target data meets a first threshold, and/or the first information is triggered based on a first condition.

In some implementation methods, if the first information is triggered based on the first condition, the first condition includes one or more of the following: the communications device does not transmit the first information to the access network device; the first information changes; a time at which the first information is transmitted arrives; the target data arrives; the target data is to be transmitted; a feature corresponding to the target data is associated; there is first information to be transmitted; or trigger information of the first information is received.

In some implementation methods, the first information includes one or more of the following: information corresponding to one or more LCHs; information corresponding to one or more LCH groups; information corresponding to one or more LCGs; information corresponding to one or more data bursts; information corresponding to one or more QoS flows; information corresponding to one or more PDUs; information corresponding to one or more PDU sets; information corresponding to one or more DRBs; information corresponding to one or more PDU sessions; or information corresponding to a target service.

In some implementation methods, the first information is carried in time-sensitive communication assistance information TSCAI; or the first information is carried in a first message, where the first message includes TSCAI; or the first information is carried in a second message, where the second message includes a QoS parameter; or the first information is carried in a QoS flow.

In some implementation methods, the first information is carried in one or more of the following: a first MAC CE, an SR, or a BSR.

In some implementation methods, the target data includes one or more of the following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

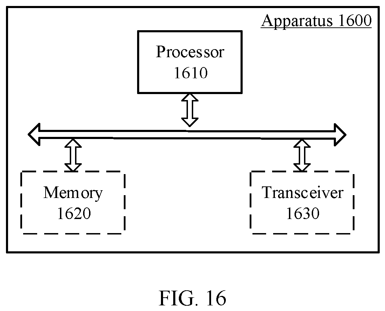

In an optional embodiment, the transmitting unit 1410 may be a transceiver 1630. The communications device 1400 may further include a processor 1610 and a memory 1620, which are specifically shown in FIG. 16.

In an optional embodiment, the transmitting unit 1510 may be a transceiver 1630. The access network device 1500 may further include a processor 1610 and a memory 1620, which are specifically shown in FIG. 16.

FIG. 16 is a schematic structural diagram of a communications apparatus according to an embodiment of this application. A dashed line in FIG. 16 indicates that the unit or module is optional. The apparatus 1600 may be configured to implement the methods described in the method embodiments. The apparatus 1600 may be a chip, a terminal device, or a network device.

The apparatus 1600 may include one or more processors 1610. The processor 1610 may support the apparatus 1600 to implement the methods described in the method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program, and the program may be executed by the processor 1610, to cause the processor 1610 to execute the methods described in the method embodiments. The memory 1620 may be separate from the processor 1610 or may be integrated into the processor 1610.

The apparatus 1600 may further include a transceiver 1630. The processor 1610 may communicate with another device or chip by using the transceiver 1630. For example, the processor 1610 may transmit data to and receive data from another device or chip through the transceiver 1630.

An embodiment of this application further provides a computer-readable storage medium, configured to store a program. The computer-readable storage medium may be applied to the terminal or the network device provided in embodiments of this application, and the program causes a computer to execute the methods to be executed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods to be executed by the terminal or the network device in various embodiments of this application.

An embodiment of this application further provides a computer program. The computer program may be applied to the terminal or the network device provided in embodiments of this application, and the computer program causes a computer to execute the methods to be executed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be acquired from A. Alternatively, it may mean that A indicates B indirectly, for example, A indicates C, and B may be acquired from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "pre-defining" or "pre-configuring" may be implemented by pre-storing corresponding code or a corresponding table in a device (for example, including a terminal device and a network device) or in other manners that may be used for indicating related information. A specific implementation thereof is not limited in this application. For example, pre-defining may indicate being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a communications device, first information to an access network device, wherein the first information comprises information related to target data, and the communications device comprises a terminal device and/or a core network device.

2. The method according to claim 1, wherein the first information comprises:
second information associated with a static or semi-static feature of the target data, and/or third information associated with a dynamic feature of the target data.

3. The method according to claim 1 or 2, wherein the first information comprises one or more of following: information about one-time transmission; information about static interaction; information about semi-static interaction; information about dynamic interaction; or information about real-time interaction; and/or
second information in the first information comprises one or more of following: information about one-time transmission; information about static interaction; or information about semi-static interaction; and/or
third information in the first information comprises one or more of following: information about dynamic interaction; or information about real-time interaction.

4. The method according to claim 2 or 3, wherein the static or semi-static feature comprises one or more of following:
a transmission direction of the target data;
a period of the target data;
a time at which the target data arrives;
a size of a data packet of the target data; or
information about a first delay of the target data.

5. The method according to claim 4, wherein if the static or semi-static feature comprises the time at which the target data arrives, the second information comprises one or more of following: the time at which the target data arrives; a time at which the target data is transmitted; a time at which the target data leaves; or a time at which a jitter occurs on the target data.

6. The method according to claim 2 or 3, wherein the dynamic feature comprises one or more of following:
information about a second delay of the target data;
a period corresponding to the target data;
buffer information of the target data;
information about a data volume of the target data; or
time information corresponding to a dynamic change of the target data.

7. The method according to claim 6, wherein if the dynamic feature comprises the information about the second delay, the third information comprises one or more of following:
information about a transmission delay corresponding to the target data;
information about a remaining delay corresponding to the target data;
information about a waiting delay corresponding to the target data in a transmission process;
information about a PDCP layer arrival time corresponding to the target data;
information about an AS layer arrival time corresponding to the target data; or
information about a statistical delay of a transmission granularity corresponding to the target data.

8. The method according to claim 6, wherein the dynamic feature comprises the information about the data volume of the target data, and the third information comprises one or more of following:
information indicating the data volume of the target data; or
information indicating a data volume change of the target data.

9. The method according to claim 6, wherein information indicating a data volume change of the target data comprises one or more of following:
information indicating a change trend of the data volume of the target data;
information indicating a characteristic change of the target data;
information indicating a data volume change amount of the target data; or
information indicating a data volume after the data volume of the target data changes.

10. The method according to any one of claims 1 to 9, wherein
the first information is periodically transmitted, and/or
the first information is triggered by an event, and/or
the first information is triggered based on a first condition, and/or
the target data meets a first threshold.

11. The method according to claim 10, wherein if the first information is triggered based on the first condition, the first condition comprises one or more of following:
the communications device does not transmit the first information to the access network device;
the first information changes;
a time at which the first information is transmitted arrives;
the target data arrives;
the target data is to be transmitted;
a feature corresponding to the target data is associated;
there is first information to be transmitted; or
trigger information of the first information is received.

12. The method according to any one of claims 1 to 11, wherein the first information comprises one or more of following:
information corresponding to one or more LCHs;
information corresponding to one or more LCH groups;
information corresponding to one or more LCGs;
information corresponding to one or more data bursts;
information corresponding to one or more QoS flows;
information corresponding to one or more PDUs;
information corresponding to one or more PDU sets;
information corresponding to one or more DRBs;
information corresponding to one or more PDU sessions; or
information corresponding to a target service.

13. The method according to any one of claims 1 to 12, wherein
the first information is carried in time-sensitive communication assistance information TSCAI; or
the first information is carried in a first message, wherein the first message comprises TSCAI; or
the first information is carried in a second message, wherein the second message comprises a QoS parameter; or
the first information is carried in a QoS flow; or
the first information is transmitted together with time-sensitive communication assistance information TSCAI; or
the first information is transmitted together with a QoS configuration or a QoS parameter.

14. The method according to any one of claims 1 to 13, wherein the first information is carried in one or more of following: a first MAC CE, an SR, or a BSR.

15. The method according to any one of claims 1 to 14, wherein the target data comprises one or more of following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

16. A wireless communication method, comprising:
receiving, by an access network device, first information transmitted by a communications device, wherein the first information comprises information related to target data, and the communications device comprises a terminal device and/or a core network device.

17. The method according to claim 16, wherein the first information comprises:
second information associated with a static or semi-static feature of the target data, and/or
third information associated with a dynamic feature of the target data.

18. The method according to claim 17, wherein the second information comprises one or more of following: information about one-time transmission; information about static interaction; or information about semi-static interaction; and/or
the third information comprises one or more of following: information about dynamic interaction; or information about real-time interaction.

19. The method according to claim 16 or 17, wherein the static or semi-static feature comprises one or more of following:
a transmission direction of the target data;
a period of the target data;
a time at which the target data arrives;
a size of a data packet of the target data; or
information about a first delay of the target data.

20. The method according to claim 19, wherein if the static or semi-static feature comprises the time at which the target data arrives, the second information comprises one or more of following: the time at which the target data arrives; a time at which the target data is transmitted; a time at which the target data leaves; or a time at which a jitter occurs on the target data.

21. The method according to claim 17 or 18, wherein the dynamic feature comprises one or more of following:
information about a second delay of the target data;
a period corresponding to the target data;
buffer information of the target data;
information about a data volume of the target data; or
time information corresponding to a dynamic change of the target data.

22. The method according to claim 21, wherein if the dynamic feature comprises the information about the second delay, the third information comprises one or more of following:
information about a transmission delay corresponding to the target data;
information about a remaining delay corresponding to the target data;
information about a waiting delay corresponding to the target data in a transmission process;
information about a PDCP layer arrival time corresponding to the target data;
information about an AS layer arrival time corresponding to the target data; or
information about a statistical delay of a transmission granularity corresponding to the target data.

23. The method according to claim 21, wherein the dynamic feature comprises the information about the data volume of the target data, and the third information comprises one or more of following:
information indicating the data volume of the target data; or
information indicating a data volume change of the target data.

24. The method according to claim 21, wherein information indicating a data volume change of the target data comprises one or more of following:
information indicating a change trend of the data volume of the target data;
information indicating a characteristic change of the target data;
information indicating a data volume change amount of the target data; or
information indicating a data volume after the data volume of the target data changes.

25. The method according to any one of claims 16 to 24, wherein
the first information is periodically transmitted, and/or
the first information is triggered by an event, and/or
the target data meets a first threshold, and/or
the first information is triggered based on a first condition.

26. The method according to claim 25, wherein if the first information is triggered based on the first condition, the first condition comprises one or more of following:
the communications device does not transmit the first information to the access network device;
the first information changes;
a time at which the first information is transmitted arrives;
the target data arrives;
the target data is to be transmitted;
a feature corresponding to the target data is associated;
there is first information to be transmitted; or
trigger information of the first information is received.

27. The method according to any one of claims 16 to 26, wherein the first information comprises one or more of following:
information corresponding to one or more LCHs;
information corresponding to one or more LCH groups;
information corresponding to one or more LCGs;
information corresponding to one or more data bursts;
information corresponding to one or more QoS flows;
information corresponding to one or more PDUs;
information corresponding to one or more PDU sets;
information corresponding to one or more DRBs;
information corresponding to one or more PDU sessions; or
information corresponding to a target service.

28. The method according to any one of claims 16 to 27, wherein
the first information is carried in time-sensitive communication assistance information TSCAI; or
the first information is carried in a first message, wherein the first message comprises TSCAI; or
the first information is carried in a second message, wherein the second message comprises a QoS parameter; or
the first information is carried in a QoS flow.

29. The method according to any one of claims 16 to 28, wherein the first information is carried in one or more of following: a first MAC CE, an SR, or a BSR.

30. The method according to any one of claims 16 to 29, wherein the target data comprises one or more of following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

31. A communications device, comprising:
a transmitting unit, configured to transmit first information to an access network device, wherein the first information comprises information related to target data, and the communications device comprises a terminal device and/or a core network device.

32. The communications device according to claim 31, wherein the first information comprises:
second information associated with a static or semi-static feature of the target data, and/or third information associated with a dynamic feature of the target data.

33. The communications device according to claim 31 or 32, wherein the first information comprises one or more of following: information about one-time transmission; information about static interaction; information about semi-static interaction; information about dynamic interaction; or information about real-time interaction; and/or
second information in the first information comprises one or more of following: information about one-time transmission; information about static interaction; or information about semi-static interaction; and/or
third information in the first information comprises one or more of following: information about dynamic interaction; or information about real-time interaction.

34. The communications device according to claim 32 or 33, wherein the static or semi-static feature comprises one or more of following:
a transmission direction of the target data;
a period of the target data;
a time at which the target data arrives;
a size of a data packet of the target data; or
information about a first delay of the target data.

35. The communications device according to claim 34, wherein if the static or semi-static feature comprises the time at which the target data arrives, the second information comprises one or more of following: the time at which the target data arrives; a time at which the target data is transmitted; a time at which the target data leaves; or a time at which a jitter occurs on the target data.

36. The communications device according to claim 32 or 33, wherein the dynamic feature comprises one or more of following:
information about a second delay of the target data;
a period corresponding to the target data;
buffer information of the target data;
information about a data volume of the target data; or
time information corresponding to a dynamic change of the target data.

37. The communications device according to claim 36, wherein if the dynamic feature comprises the information about the second delay, the third information comprises one or more of following:
information about a transmission delay corresponding to the target data;
information about a remaining delay corresponding to the target data;
information about a waiting delay corresponding to the target data in a transmission process;
information about a PDCP layer arrival time corresponding to the target data;
information about an AS layer arrival time corresponding to the target data; or
information about a statistical delay of a transmission granularity corresponding to the target data.

38. The communications device according to claim 36, wherein the dynamic feature comprises the information about the data volume of the target data, and the third information comprises one or more of following:
information indicating the data volume of the target data; or
information indicating a data volume change of the target data.

39. The communications device according to claim 36, wherein information indicating a data volume change of the target data comprises one or more of following:
information indicating a change trend of the data volume of the target data;
information indicating a characteristic change of the target data;
information indicating a data volume change amount of the target data; or
information indicating a data volume after the data volume of the target data changes.

40. The communications device according to any one of claims 31 to 39, wherein
the first information is periodically transmitted, and/or
the first information is triggered by an event, and/or
the first information is triggered based on a first condition, and/or
the target data meets a first threshold.

41. The communications device according to claim 40, wherein if the first information is triggered based on the first condition, the first condition comprises one or more of following:
the communications device does not transmit the first information to the access network device;
the first information changes;
a time at which the first information is transmitted arrives;
the target data arrives;
the target data is to be transmitted;
a feature corresponding to the target data is associated;
there is first information to be transmitted; or
trigger information of the first information is received.

42. The communications device according to any one of claims 31 to 41, wherein the first information comprises one or more of following:
information corresponding to one or more LCHs;
information corresponding to one or more LCH groups;
information corresponding to one or more LCGs;
information corresponding to one or more data bursts;
information corresponding to one or more QoS flows;
information corresponding to one or more PDUs;
information corresponding to one or more PDU sets;
information corresponding to one or more DRBs;
information corresponding to one or more PDU sessions; or
information corresponding to a target service.

43. The communications device according to any one of claims 31 to 42, wherein
the first information is carried in time-sensitive communication assistance information TSCAI; or
the first information is carried in a first message, wherein the first message comprises TSCAI; or
the first information is carried in a second message, wherein the second message comprises a QoS parameter; or
the first information is carried in a QoS flow; or
the first information is transmitted together with time-sensitive communication assistance information TSCAI; or
the first information is transmitted together with a QoS configuration or a QoS parameter.

44. The communications device according to any one of claims 31 to 43, wherein the first information is carried in one or more of following: a first MAC CE, an SR, or a BSR.

45. The communications device according to any one of claims 31 to 44, wherein the target data comprises one or more of following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

46. An access network device, comprising:
a receiving unit, configured to receive first information transmitted by a communications device, wherein the first information comprises information related to target data, and the communications device comprises a terminal device and/or a core network device.

47. The access network device according to claim 46, wherein the first information comprises:
second information associated with a static or semi-static feature of the target data, and/or
third information associated with a dynamic feature of the target data.

48. The access network device according to claim 47, wherein the second information comprises one or more of following: information about one-time transmission; information about static interaction; or information about semi-static interaction; and/or
the third information comprises one or more of following: information about dynamic interaction; or information about real-time interaction.

49. The access network device according to claim 46 or 47, wherein the static or semi-static feature comprises one or more of following:
a transmission direction of the target data;
a period of the target data;
a time at which the target data arrives;
a size of a data packet of the target data; or
information about a first delay of the target data.

50. The access network device according to claim 49, wherein if the static or semi-static feature comprises the time at which the target data arrives, the second information comprises one or more of following: the time at which the target data arrives; a time at which the target data is transmitted; a time at which the target data leaves; or a time at which a jitter occurs on the target data.

51. The access network device according to claim 47 or 48, wherein the dynamic feature comprises one or more of following:
information about a second delay of the target data;
a period corresponding to the target data;
buffer information of the target data;
information about a data volume of the target data; or
time information corresponding to a dynamic change of the target data.

52. The access network device according to claim 51, wherein if the dynamic feature comprises the information about the second delay, the third information comprises one or more of following:
information about a transmission delay corresponding to the target data;
information about a remaining delay corresponding to the target data;
information about a waiting delay corresponding to the target data in a transmission process;
information about a PDCP layer arrival time corresponding to the target data;
information about an AS layer arrival time corresponding to the target data; or
information about a statistical delay of a transmission granularity corresponding to the target data.

53. The access network device according to claim 51, wherein the dynamic feature comprises the information about the data volume of the target data, and the third information comprises one or more of following:
information indicating the data volume of the target data; or
information indicating a data volume change of the target data.

54. The access network device according to claim 51, wherein information indicating a data volume change of the target data comprises one or more of following:
information indicating a change trend of the data volume of the target data;
information indicating a characteristic change of the target data;
information indicating a data volume change amount of the target data; or
information indicating a data volume after the data volume of the target data changes.

55. The access network device according to any one of claims 46 to 54, wherein
the first information is periodically transmitted, and/or
the first information is triggered by an event, and/or
the target data meets a first threshold, and/or
the first information is triggered based on a first condition.

56. The access network device according to claim 55, wherein if the first information is triggered based on the first condition, the first condition comprises one or more of following:
the communications device does not transmit the first information to the access network device;
the first information changes;
a time at which the first information is transmitted arrives;
the target data arrives;
the target data is to be transmitted;
a feature corresponding to the target data is associated;
there is first information to be transmitted; or
trigger information of the first information is received.

57. The access network device according to any one of claims 46 to 56, wherein the first information comprises one or more of following:
information corresponding to one or more LCHs;
information corresponding to one or more LCH groups;
information corresponding to one or more LCGs;
information corresponding to one or more data bursts;
information corresponding to one or more QoS flows;
information corresponding to one or more PDUs;
information corresponding to one or more PDU sets;
information corresponding to one or more DRBs;
information corresponding to one or more PDU sessions; or
information corresponding to a target service.

58. The access network device according to any one of claims 46 to 57, wherein
the first information is carried in time-sensitive communication assistance information TSCAI; or
the first information is carried in a first message, wherein the first message comprises TSCAI; or
the first information is carried in a second message, wherein the second message comprises a QoS parameter; or
the first information is carried in a QoS flow.

59. The access network device according to any one of claims 46 to 58, wherein the first information is carried in one or more of following: a first MAC CE, an SR, or a BSR.

60. The access network device according to any one of claims 46 to 59, wherein the target data comprises one or more of following: a to-be-transmitted data packet; to-be-transmitted burst data; a to-be-transmitted PDU set; a to-be-transmitted QoS flow, a to-be-transmitted service flow, a to-be-transmitted data flow, or data that belongs to a first PDU session.

61. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 15.

62. An access network device, comprising a transceiver, a memory, and a processor, wherein the memory is configured to store a program, and the processor is configured to invoke the program in the memory, and control the transceiver to receive or transmit a signal, to cause the access network device to execute the method according to any one of claims 16 to 30.

63. An apparatus, comprising a processor, configured to invoke a program from a memory, to cause the apparatus to execute the method according to any one of claims 1 to 30.

64. A chip, comprising a processor, configured to invoke a program from a memory, to cause a device on which the chip is installed to execute the method according to any one of claims 1 to 30.

65. A computer-readable storage medium, wherein the computer-readable storage medium stores a program, and the program causes a computer to execute the method according to any one of claims 1 to 30.

66. A computer program product, comprising a program, wherein the program causes a computer to execute the method according to any one of claims 1 to 30.

67. A computer program, wherein the computer program causes a computer to execute the method according to any one of claims 1 to 30.
